# EUROPEAN PATENT SPECIFICATION

(11) **EP 2 339 783 B1**
(45) Date of publication and mention of the grant of the patent: **12.10.2016**
(21) Application number: 09825741.3
(22) Date of filing: 28.08.2009
(51) Int. Cl.: H04L 12/26, H04J 3/14, H04L 12/24, H04Q 11/00, H04L 12/42

(54) **METHOD AND NETWORK NODE FOR ALARMING AND PERFORMANCE MONITORING**
VERFAHREN UND NETZWERKKNOTEN ZUM ALARMIEREN UND LEISTUNGSÜBERWACHUNG
PROCÉDÉ ET NOEUD DE RÉSEAU PERMETTANT D'AVERTIR ET DE SURVEILLER DES PERFORMANCES

(30) Priority: 17.11.2008 CN 200810219141
(43) Date of publication of application: 29.06.2011
(73) Proprietor: Huawei Technologies Co., Ltd., Longgang District Shenzhen, Guangdong 518129 (CN)
(72) Inventor: ZHANG, Yi, Shenzhen Guangdong 518129 (CN); CAO, Yang, Shenzhen Guangdong 518129 (CN); ZHOU, Jianlin, Shenzhen Guangdong 518129 (CN); CAO, Shiyi, Shenzhen Guangdong 518129 (CN)
(74) Representative: Isarpatent
(86) International application number: PCT/CN2009/073608
(87) International publication number: WO 2010/054566

(56) References cited:
- WO-A1-2007/109937
- CN-A- 1 845 516
- CN-A- 101 043 267
- CN-A- 101 212 403
- US-A1- 2006 104 296
- "Time-Space Label Switched Optical Networks", SPIE, PO BOX 10 BELLINGHAM WA 98227-0010 USA, 31 December 2007 (2007-12-31), XP040248785,
- "Characteristics of optical transport network hierarchy equipment functional blocks; G.798 (12/06)", ITU-T STANDARD, INTERNATIONAL TELECOMMUNICATION UNION, GENEVA ; CH, no. G.798 (12/06), 14 December 2006 (2006-12-14), pages 1-310, XP017435541, [retrieved on 2007-12-04]
- MARI W MAEDA (INVITED PAPER): "Management and Control of Transparent Optical Networks", IEEE JOURNAL ON SELECTED AREAS IN COMMUNICATIONS, IEEE SERVICE CENTER, PISCATAWAY, US, vol. 16, no. 7, 1 September 1998 (1998-09-01), XP011054837, ISSN: 0733-8716

## Description

### FIELD OF THE TECHNOLOGY

The present invention relates to the communication field, and more particularly to a method for alarm and performance monitoring and a network node.

### BACKGROUND OF THE INVENTION

The emergence and ongoing development of the Internet drive the revolution of the modem communication network. All the new born video on demand, network games, and Internet Protocol (IP) telephone are data services based on the Internet. The rapid increase of the data services already surpass the conventional voice service and will continue to extend the gap. It is already a common understanding in the industry to establish a transmission network suitable for data services. This requires that the new transmission network can differentiate service transmission with different quality of service (QoS) while still guaranteeing to provide telecommunication level QoS, and can desirably support dynamic allocation of network bandwidth. Thus, new ring-type optical network architecture is proposed, which is referred to as an Ex-OBRing.

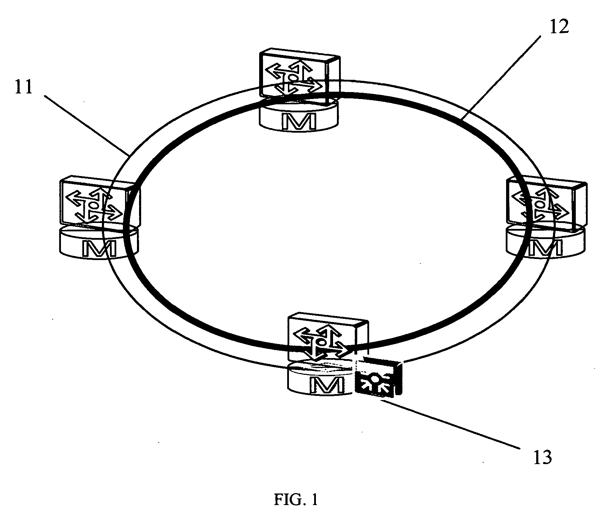

FIG. 1 is a schematic view of architecture of an Ex-OBRing network. The schematic view is specifically a schematic view of architecture of a wavelength-division multiplexing (WDM) optical ring-type network, in which one wavelength is specified as a control wavelength/channel 11 used for transmitting control information, and other wavelengths are data wavelengths/channels 12 used for transmitting service data.

The control channel 11 transmits the control information in a continuous transfer mode, and the transmitted information has a fixed frame structure. Except for a synchronization field at the beginning of each frame, in other portions of the frame scrambles are used. In a ring network, each node receives control information transmitted by a previous node, and sends the control information to a next node after processing.

The data channels 12 transmit service data information in a burst transfer mode. The feature of the burst transfer is that during data transmission, the data is placed in a data burst structure for transmission. A channel is idle when no data transmission occurs (idle levels except 0 and 1). Different from the continuous frame structure, it is specified to regard each data burst as a physical unit for transmission of data channels 12. For each data burst, except for the preamble and delimiter in the front, other portions are scrambled. Different from the transmission of control information through the control channel 11, the data burst transmitted on the data channels 12 does not need the processing procedure from the optical field to the electric field at each node in the ring network. That is to say, the data burst is only sent at a source node and received at a destination node thereof, and is directly carried on the optical wavelengths to pass through all nodes between the source node and the destination node in the ring network. In an Ex-OBRing, it is specified that multiple data bursts and idle area fields among bursts form a virtual frame structure. The frame structure has the same duration as the continuous frame structure of the control channel, and also, the previous and next virtual frame structures are connected together.

In addition to the control channel 11 and the data channels 12, in the schematic view of the network architecture of the Ex-OBRing, multiple nodes are further included. One node is a master node 13, which is responsible of control and management of the whole network, particularly responsible of the unified allocation of bandwidth resources in the whole network, and controls data sending and reception of other nodes in the ring network by releasing a bandwidth map (BWMap). In addition, in order to guarantee synchronization of data transmission of the control channel 11 and the data channels 12 and ensure that a ring data channel 12 can just accommodate a structure having a duration of an integral number of virtual frames, corresponding control and adjustment mechanism are needed. For convenience of unified management, the Ex-OBRing network usually also integrates the function of synchronization control and management in the master node 13.

Generally, an optical transfer system should have "self-diagnosis" capability, that is, the alarm and performance monitoring capabilities. The Ex-OBRing should have the "self-diagnosis" capability too as new optical transfer network architecture.

In the prior art, a synchronous digital hierarchy (SDH) is a transmission technology that is currently the most mature and is mostly standardized. As the transmission of the SDH has a multiple-layer structure and the data transmission also has multiple levels, the alarm mechanism also has multiple layers. In addition, the multiple-layer alarm mechanism of the SDH is vertical, that is, the multiple layers have a multiplexing relationship. In the Ex-OBRing network, the data channels only have one layer of data burst structure, the control frame transmission of the control channels also only has one layer of frame structure, and the control channel and the data channels are independent from each other, in which a multiple-layer multiplexing relationship does not exist. Therefore, the alarm mechanism of the SDH is not applicable to the Ex-OBRing network.

In the prior art, another optical access network, that is, gigabit-capable passive optical networks (GPON) is a new type optical access network technology, the network topology of which is designed as a star structure. The alarm and performance monitoring of the GPON include detecting failures of a link and monitoring a health status and performance of the link. Apparently, the GPON and Ex-OBRing are very different in the network topology. The GPON is a master/slave star network, the alarm and performance monitoring of which are only performed between two sorts of nodes including an optical line termination (OLT) and an optical network termination (ONT), and also, no further information exchange exists between the ONTs. The Ex-OBRing network is a ring structure, in which multiples node are peer entities in the alarm processing, so that transfer of alarm messages exists between multiple nodes, and also in the Ex-OBRing network, as the control channel and the data channels are separated, together with different transmission systems, that is, continuous transmission in the control channel and burst transmission in the data channels, the alarm and performance monitoring mechanism of the GPON is also not applicable to the Ex-OBRing.

In conclusion, the alarm mechanism in the prior art is not applicable to the Ex-OBRing network, so that new alarm and performance monitoring mechanisms need to be designed according to the features of the Ex-OBRing network, so as to realize the "self-diagnosis" capability that the Ex-OBRing network detects, locates, and finds a root of a problem.

According to WO 2007/109937 A1, a control channel is intended for transmitting Burst Control Packets (BCPs) and data channels are intended for transmitting Burst Data Packets (BDPs); the physical layer sends a C_Signal_Failure indication or a C_Signal_Degrade indication to the failover module of the MAC layer after detecting failure or degrade of the control channel; for the fault of a single data channel (a D_Signal_Failure (i)/ D_Signal_Degrade (i) indication or a fault notification is received), the failover method applied under the present invention is to stop use of the faulty data channel.

XP040248785 "Time-Space Label Switched Optical Networks" discloses that the information of burst length and the offset time are contained in the control packet, thereby reserving data channel for the burst and providing the exact time when the data burst arrives at each core node.

### SUMMARY OF THE INVENTION

In the embodiments, the present invention is directed to a method for alarm and performance monitoring, so that the Ex-OBRing network realizes the objectives of the alarm and performance monitoring.

The objective technical problem is solved by the method claim 1 and its dependent claims, and by the network node claim 9 and its dependent claims.

For the method for alarm and performance monitoring and the network node according to the embodiments of the present invention, in the process that the alarm and performance monitoring are performed on the control channels, through the data BWMap information contained in the control channels, the location information of the data bursts in the data channels is determined, and the alarm and performance monitoring are performed on the data channels according to the location information, so that the control channels and the data channels cooperate to perform alarm and performance monitoring, thus realizing the alarm and performance monitoring of the control channels and data channels in an optical ring network.

### BRIEF DESCRIPTION OF THE DRAWINGS

In order to illustrate the technical solutions in the embodiments of the present invention or in the prior art more clearly, the accompanying drawings that need to be used in the description of the embodiments or in the prior art briefly introduced in the following. Apparently, the accompanying drawings described in the following are merely some embodiments of the present invention, and persons of ordinary skill in the art can further acquire other accompanying drawings according to the accompanying drawings without creative efforts.
FIG. 1 is a schematic view of architecture of an Ex-OBRing network;
FIG. 2 is a schematic structural view of control frames in control channels in an Ex-OBRing network;
FIG. 3 is a schematic structural view of virtual data frames in data channels in an Ex-OBRing network;
FIG. 4 is a schematic structural view of a node in an Ex-OBRing network;
FIG 5 is a schematic flow chart of a method for alarm and performance monitoring according to an embodiment of the present invention;
FIG 6 is a schematic flow chart of a method for alarm and performance monitoring of control channels according to an embodiment of the present invention;
FIG 7 is a schematic flow chart of a method for alarm and performance monitoring of data channels according to an embodiment of the present invention;
FIG. 8 is a schematic flow chart of a method for alarm and performance monitoring of intermediate nodes in the data channels according to an embodiment of the present invention;
FIG. 9 is a schematic flow chart of a method for alarm and performance monitoring of destination nodes of data channels according to an embodiment of the present invention;
FIG. 10 is a schematic component diagram of a network node according to a first embodiment of the present invention;
FIG. 11 is a schematic component diagram of a control channel alarm monitoring module according to an embodiment of the present invention;
FIG. 12 is a schematic component diagram of a data channel alarm monitoring module according to an embodiment of the present invention;
FIG. 13 is a schematic component diagram of an intermediate node alarm monitoring unit according to an embodiment of the present invention;
FIG. 14 is a schematic component diagram of a destination node alarm monitoring unit according to an embodiment of the present invention;
FIG. 15 is a schematic component diagram of a network node according to a second embodiment of the present invention; and
FIG. 16 is a function structure and signal processing diagram of a network node according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the described embodiments are merely a part of the embodiments of the present invention rather than all the embodiments. Based on the embodiments of the present invention, all other embodiments acquired by persons of ordinary skill in the art without creative efforts should fall within the protection scope of the present invention.

For a method for alarm and performance monitoring and network node in the embodiments of the present invention, in a process that alarm and performance monitoring are performed on control channels, through the bandwidth map (BWMap) information contained in the data in the control channels, location information of data bursts in the data channels is determined, and alarm and performance monitoring are performed on the data channels according to the location information, so that the control channels and the data channels cooperate to perform alarm and performance monitoring, thus realizing the alarm and performance monitoring of the control channels and data channels in an optical ring network.

For ease of understanding of the technical solutions in the embodiments of the present invention, control frames in control channels in an Ex-OBRing network, virtual data frames in data channels, and a structure of a network node in the Ex-OBRing network are illustrated in detail.

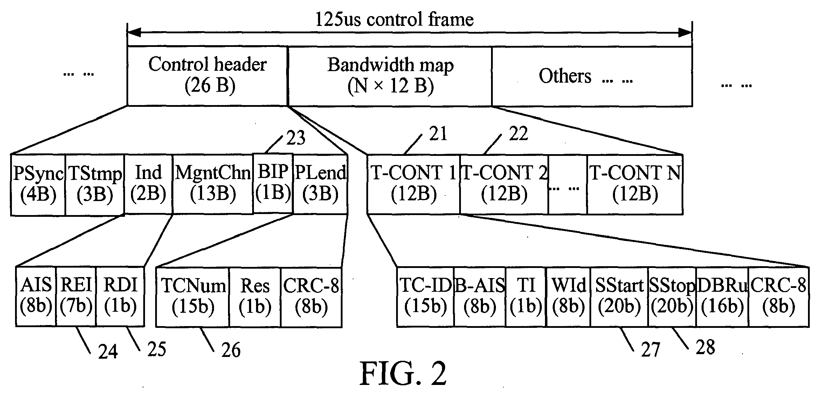

FIG. 2 is a schematic structural view of control frames in control channels in an Ex-OBRing network. As shown in FIG. 2, frame duration of the control frame is set to 125 us, and the frame structure includes a control header, a BWMap and other payload areas. The control header contains three fields: a bit-interleaved-parity (BIP) 23, a remote error indication (REI) 24, and a remote defect indication (RDI) 25 for alarm and performance monitoring by control channels. Subsequently, the control header is a BWMap, and the BWMap contains N BWMap subitems having the same duration. The number N here depends on a field transmission container number (TCNum) 26 in the control header. One control frame is synchronized with and corresponding to one virtual data frame in a data channel, and a BWMap subitem of a control frame corresponds to a transmission container (T-CONT) in a virtual data frame. Two field values of session start (SStart) 27 and session stop (SStop) 28 in the subitem specify start and stop locations of the corresponding T-CONT in the virtual data frame, respectively. Thus, the whole BWMap depicts bandwidth allocation for each T-CONT in a corresponding virtual data frame.

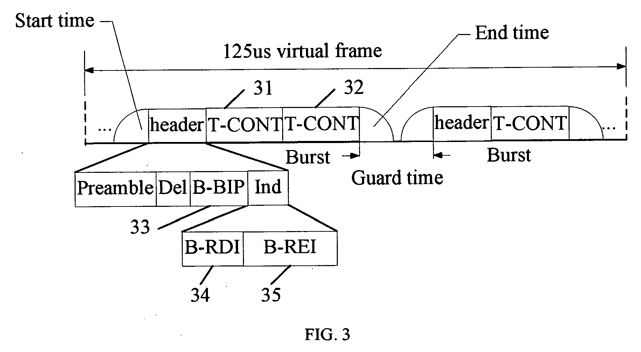

FIG. 3 is a schematic structural view of virtual data frames in data channels in an Ex-OBRing network. As shown in FIG. 3, virtual frame structures having fixed duration are connected in the data channels, for example, virtual frame duration is set to 125 us. In the virtual frame structure, multiple data bursts that practically transmit data exist. The data bursts are directly transmitted on optical wavelengths. Each data burst can be sent from a different source node or/and received at a different destination node, so that a header and a tail of the data burst have laser turn-on and turn-off time respectively. In addition, a valid data interval of the data burst is formed of a header and a payload. The header has a preamble and a delimiter as well as three fields including a burst BIP (B-BIP) 33, a burst-RDI (B-RDI) 34, and a burst REI (B-REI) 35 for alarm and performance monitoring. The payload area can be divided into multiple container structures for data transmission, which are referred to as T-CONTs. The T-CONT is an entity that the network performs bandwidth allocation. The T-CONTs decide corresponding bandwidth allocation policies according to respective attributes thereof. The attributes of the T-CONTs correspond to quality of service (QoS) requirements of transmission of data services accommodated therein. The data services are directly placed in the T-CONTs for transmission, so as to realize services with different QoS.

Referring to FIGs. 2 and 3 together, as the transmission of frames in the control channels and the transmission of virtual frames in the data channels keep synchronous in the Ex-OBRing, a BWMap subitem in the control frame in FIG. 2 corresponds to a T-CONT in the virtual data frame in FIG. 3. For example, a BWMap subitem 21 in FIG. 2 corresponds to a T-CONT 31 in a virtual data frame in FIG. 3, and a BWMap subitem 22 in FIG. 2 corresponds to a T-CONT 32 in a virtual data frame in FIG. 3. Two field values SStart27 and SStop28 in the BWMap subitem specify start and stop locations of the corresponding T-CONT in the virtual data frame respectively. Thus, the whole BWMap in the control frame depicts bandwidth allocation of each T-CONT in the corresponding virtual data frame.

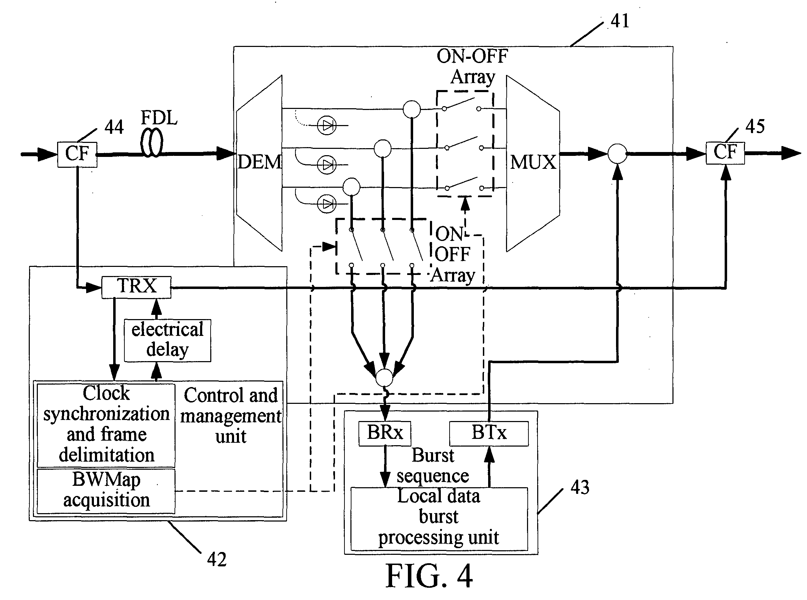

FIG. 4 is a schematic structural view of a node in an Ex-OBRing network. As shown in FIG. 4, the network node mainly includes three functional modules: an optical burst add-drop multiplexer (OBADM) module 41, a control channel transceiver and processing module 42, and a local data burst transceiver and processing module 43. A coupling filter (CF) 44 separates a control channel wavelength from the optical fibers that enter the node. The control channel transceiver and processing module 42 receives and processes the optical signals of the control channels, and sends the processed optical signals to the same wavelength, which are coupled to optical fibers at node exits by using another CFCF 45. The alarm and performance monitoring of the control channels are apparently performed in the control channel transceiver and processing module 42. The residual optical signals after passing through the entrance CF 44 pass through a fiber delay line (FDL) and enter the OBADM module 41. According to the control information of the control channel transceiver and processing module 42, for example, the line segments represented by dotted lines in FIG. 4, the OBADM module 41 is controlled to configure switches therein, and local optical signals are determined. In addition, the local optical signals are directly coupled to optical fibers at the exit of the OBADM module 41. Each wavelength in the OBADM module 41 has a tap and a few parts of optical signals are separated and the optical signals are detected and used for alarm of the intermediate nodes in the data channels. The local data burst transceiver and processing module 43 receives the data bursts at the wavelengths in the OBADM module 41, and is the destination node of the data bursts. The alarm and performance monitoring of the data bursts are performed in the data burst transceiver and processing module 43. The local data bursts that need to be uploaded are also sent to corresponding wavelengths by the local data burst transceiver and processing module 43, and enter the upper wavelength port of the OBADM module 41.

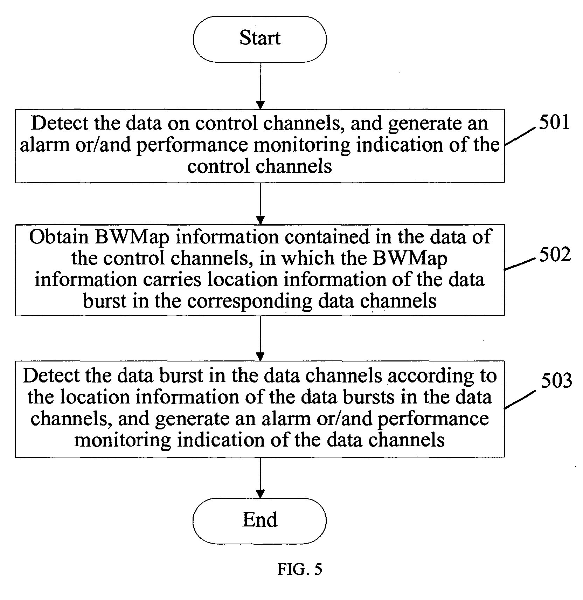

FIG. 5 is a schematic flow chart of a method for alarm and performance monitoring according to an embodiment of the present invention. As shown in FIG. 5, the method includes the following steps.

In Step 501, the data on control channels is detected, and an alarm or/and performance monitoring indication of the control channels is generated.

In Step 502, BWMap information contained in the data of the control channels is obtained. The BWMap information carries location information of the data burst in the corresponding data channels. Here, the control frames transmitted in the control channels contain BWMap items, which indicate locations of data bursts in the data channels corresponding to the control frames. The information directly determines whether the alarm processing of the intermediate nodes in the data channels and the alarm processing of the destination nodes in the data channels can be performed.

In Step 503, according to the location information of the data bursts in the data channels, the data burst in the data channels is detected, and an alarm or/and performance monitoring indication of the data channels is generated.

In the implementation of the method for alarm and performance monitoring according to the embodiment of the present invention, in the process that the alarm and performance monitoring are performed on the control channels, through the BWMap information contained in the data in the control channels, the location information of data burst in the data channels is determined, and alarm and performance monitoring are performed on the data channels according to the location information, so that the control channels and the data channels cooperate to perform alarm and performance monitoring, thus realizing the alarm and performance monitoring of the control channels and data channels in an optical ring network.

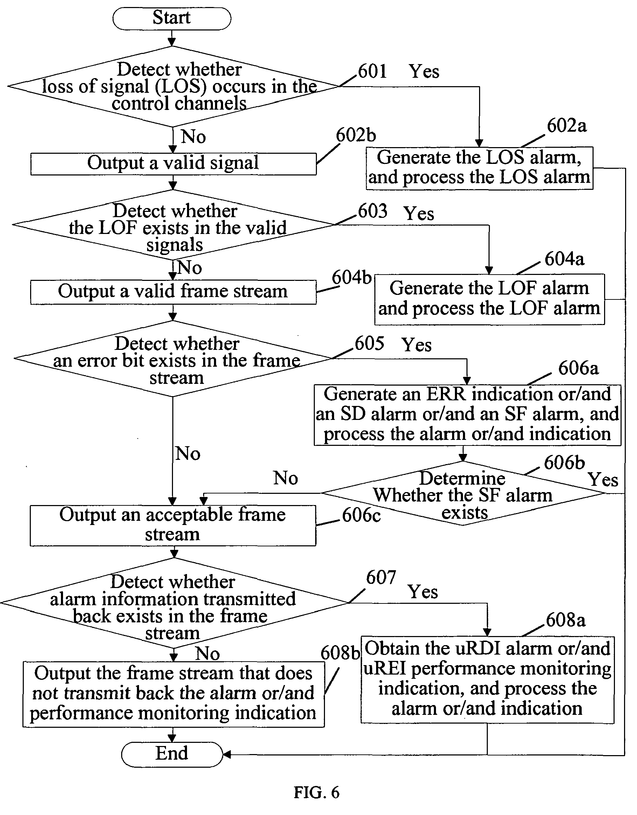

FIG. 6 is a schematic flow chart of a method for alarm and performance monitoring of control channels according to an embodiment of the present invention. The content transmitted in the control channels are continuous frame structures having fixed duration. As the control channels of the Ex-OBRing only has one layer of the frame structure, the control channels only have one level of alarm and performance monitoring. In order to detect the data in the control channels, the optical signals in the control channels need to be converted into electrical signals, so as to detect the data in the control channels in the electric field. After the detection of the data in the control channels in the electric field is finished, the electrical signals are then converted into optical signals. The method for alarm and performance monitoring of control channels includes the following steps.

In Step 601, it is detected whether loss of signal (LOS) occurs in the control channels. Here, when the optical signals of the control channels are converted into electrical signals, optical power detection is performed on the received optical signals of the control channels. If a failure occurs to an upstream node or path, the detected optical power is lower than its sensitiveness, and a LOS alarm is generated.

In Step 602a, when it is detected that LOS occurs, the LOS alarm is generated, and the LOS alarm is processed. Here, processing of the LOS alarm includes the following steps. An RDI alarm to be transmitted back in an upstream direction and an inserted alarm indication signal (AIS) alarm to be transferred in a downstream direction are generated. The RDI alarm facilitates the upstream node to locate the failure and perform corresponding processing. The AIS alarm signal facilitates the downstream node to locate the failure and perform corresponding processing. Also, according to the generated LOS alarm, the LOS alarm can be further reported to a master alarm processing system and control information of abandoning detection of data bursts of the data channels can be further sent to the nodes of the data channels. It should be noted that in the Ex-OBRing, the inserted alarm signal AIS sets all AIS fields in the control frames to "1", the regions following the control header including BWMap and other control regions are all set to " 1". Of course, fields of other control headers such as a synchronization code field in the control frame are all generated by the nodes that are processing the control frames. Besides the synchronization code field, data in other portions is scrambled when being sent to the control channel wavelength after passing through the E/O.

It should be noted that in specific implementations, conditions of generating and canceling LOS alarms and corresponding processing are as shown in Table 1.

**Table 1:**

| Alarm Type | Alarm Generation Condition | Alarm Processing | Alarm Cancellation Condition | Alarm Cancellation Processing |
|---|---|---|---|---|
| LOS alarm | Within 100 us, no valid signal is detected. | Set all payload areas to 0 (including BWMap); set all PLends (payload length indication transferred downstream) to 1; transmit back RDIs to uplink ports; and generate inserted AIS alarms. | Within 125 us, a valid signal is received. | Recover payload areas to normal data; cancel back transmission of RDI to uplink ports; and cancel inserted AIS alarm |

As shown in Table 1, if no valid signal is detected within 100 us, a LOS alarm is generated and the alarm is processed. After valid signals are detected within continuous 125 us, the alarm is cancelled and corresponding processing is performed.

In Step 602b, when it is detected no LOS is detected, a valid signal is output.

In Step 603, according to a frame synchronization algorithm, it is detected whether the LOF exists in the valid signals. Here, specifically, it is detected whether the LOF exists in the signals by searching the frame synchronization codes in the signals. The frame synchronization code has a special code type, is not scrambled, and usually occupies 4 bytes, and the code type is 0xB6AB31E0, which is used in both synchronous digital hierarchy (SDH) and gigabit-capable passive optical networks (GPON). As frame duration of the control frame is determined, according to the frame synchronization algorithm, if no valid frame synchronization code is found in one or multiple continuous frames, a loss of frame (LOF) alarm can be generated.

In Step 604a, when the LOF is detected, the LOF alarm is generated and the LOF alarm is processed. Here, the processing of the LOF alarm specifically includes the following steps. An RDI alarm to be transmitted back in an upstream direction and an inserted AIS alarm to be transferred in a downstream direction are generated. Also, according to the generated LOF alarm, the LOF alarm is reported to a master alarm processing system and control information of abandoning data detection of the data channels is sent to the data channels.

It should be noted that in the specific implementation, conditions of generating and canceling the LOF alarm and corresponding processing are as shown in Table 2.

**Table 2:**

| Alarm Type | Alarm Generation Condition | Alarm Processing | Alarm Cancellation Condition | Alarm Cancellation Processing |
|---|---|---|---|---|
| LOF alarm | 5 invalid PSync data frames are received continuously. | Set all payload areas to 0 (including the BWMap); set all PLends to 1; transmit back the RDI to an uplink port; and generate inserted AIS alarm. | 2 valid PSync (physical synchronization) data frames are received continuously. | Recover the payload areas to normal data; cancel back-transmission of the RDI to the uplink port; and cancel the inserted AIS alarm. |

In an Ex-OBRing network, it is assumed that the fixed duration of the frame is 125 us. As shown in Table 2, if no frame synchronization code is found in 5 continuous frame duration time, a LOF alarm is generated and the alarm is processed. At a "LOF" status, if the frame synchronization code is detected within the time of 2 continuous frames, the alarm is cancelled and corresponding processing is performed.

In Step 604b, when the LOF is not detected, a valid frame stream is output.

In Step 605, data check is performed on the valid frame stream, and it is detected whether an error bit exists in the frame stream. Here, the frame stream can be checked by using a BIP-8 check method.

In Step 606a, when the error bit is detected in the frame stream, a bit error rate is counted. According to an amount of the counted bit error rate, a performance monitoring indication or/and signal degrade (SD) alarm or/and signal fail (SF) alarm for a corresponding error (ERR, BIP Errors) is generated, and the alarm or/and performance monitoring indication is processed.

It should be noted that when the error bit is detected, first, an error (ERR, BIP Errors) performance monitoring indication might be generated and the performance monitoring indication is processed. Specifically, according to an accumulation number of the BIP-8 check error bit provided by the ERR performance monitoring indication, a REI performance monitoring indication to be transmitted back to the upstream node can be generated, and also, the ERR performance monitoring indication is reported to a master alarm processing system.

According to the ERR performance monitoring indication, an SD alarm might be generated and the alarm is processed. Specifically, the SD alarm is reported to the master alarm processing system.

According to the ERR performance monitoring indication or/and SD alarm, the SF alarm might be generated, and the SF alarm is processed. Here, according to the SF alarm, an RDI alarm to be transmitted back in an upstream direction and an inserted AIS alarm to be transferred in a downstream direction can be generated. Also, the SF alarm is reported to the master alarm processing system and control information of abandoning data detection of the data channels is sent to the node of the data channels.

It should be noted that in the specific implementation, conditions of generating and canceling the ERR performance monitoring indication, the SD alarm, and the SF alarm and corresponding processing are as shown in Table 3.

**Table 3:**

| Performance Monitoring Type | Performance Monitoring Generation Condition | Performance Monitoring Processing | Performance Monitoring Cancellation Condition | Performance Monitoring Cancellation Processing |
|---|---|---|---|---|
| ERR performance monitoring indication | Compare the received BIP8 with the calculated BIP8; if different, add 1 in the Err counter | Accumulate different bit numbers in the Err. According to the corresponding threshold value, trigger SD or SF. | None | None |
| Alarm Type | Alarm Generation Condition | Alarm Processing | Alarm Cancellation Condition | Alarm Cancellation Processing |
| SD alarm | BER ≥ 10-x 4 <= x <= 9 and x>y | None | BER <10-(x+1) | None |
| SF alarm | BER ≥ 10-y 3 <= y <= 8 | Set all payload areas to 0 (including the BWMap); and set all PLends to 1; transmit back RDI to the uplink port; and generate an inserted AIS alarm. | BER <10-(y+1) | Recover the payload area to normal data; cancel back-transmission of the RDI to the uplink port; and cancel the inserted AIS alarm. |

Here, the valid frame stream is checked by using the BIP-8 check. Specifically, parity check is performed on all data from a previous control frame BIP byte to a current control frame BIP byte. If at least one bit error exists, an ERR performance monitoring indication is generated, and the bit number of the error is accumulated, so as to calculate a bit error rate (BER) of the channel transmission data. If BER≥10-x, x=4∼9, and x>y, an SD alarm is generated. If BER≥10-y, y=3∼8, an SF alarm is generated. The SD and SF alarms also have corresponding cancellation conditions and processing methods, which may be obtained with reference to Table 3.

In Step 606b, it is determined whether the SF alarm exists. As the SF alarm is an instant interrupt alarm, when such an alarm is generated, the continued forward transfer of the frame stream in the control channel is terminated. If no SF alarm exists, the frame stream transferred in the control channel is an acceptable frame stream, and can continue forward transfer.

In Step 606c, when no error bit is detected or a detected error bit is within a certain range, an acceptable frame stream is output. Here, when the ERR performance monitoring indication or/and SD alarm is detected, the error bit that exists in the frame stream is acceptable, so that the acceptable frame stream can be output.

In Step 607, it is detected whether an alarm or/and performance monitoring indication transmitted back to the upstream node exists in the acceptable frame stream. Here, if the alarm or/and performance monitoring indication transmitted back to the upstream node exists, the alarm or/and performance monitoring indication transmitted back to the upstream node is detected in the REI field or/and RDI field in the control frame.

In Step 608a, when the alarm or/and performance monitoring indication is detected, the detected uRDI alarm or/and uREI performance monitoring indication is obtained, and the alarm or/and performance monitoring indication is processed. Here, the processing of the alarm or/and performance monitoring indication specifically includes the following steps. The uREI performance monitoring indication or/and uRD alarm is reported to the master alarm processing system, and the two messages are suitable processed, for example, operations such as protection switching. It should be further noted that the detected uRDI alarm or/and uREI performance monitoring indication does not influence the data transmission.

In Step 608b, when no alarm or/and performance monitoring indication is detected, the frame stream that does not transmit back the alarm or/and performance monitoring indication is output.

It should be noted that all the LOS alarm, LOF alarm, and SF alarm are instant interrupt alarms, that is, if such alarms are generated, the continued forward transfer of the data of the control channels is terminated. The detected ERR performance monitoring indication, SD alarm, uREI performance monitoring indication, and uRDI alarm do not influence the continued transfer of the data of the control channels.

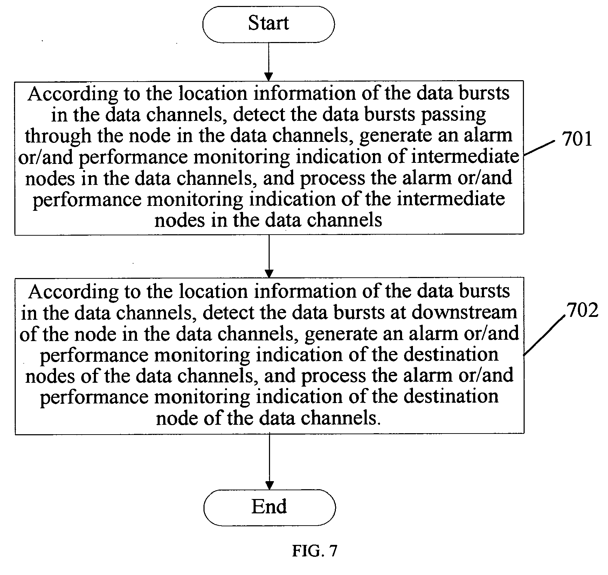

FIG. 7 is a schematic flow chart of a method for alarm and performance monitoring of data channels according to an embodiment of the present invention. In an optical ring network, for example, an Ex-OBRing network, the transmission of service data information in data channels adopts a burst transfer mode. Not all data bursts transmitted on the data channels are received from an optical field to an electric field for processing at each node on the ring network. That is to say, the data burst is only sent at the source node and received at the destination node, and directly pass through the optical wavelengths at each intermediate node. Therefore, the intermediate node and the destination node in the data channels adopt different alarm and performance monitoring mechanism. The method for alarm and performance monitoring of the data channels includes the following steps.

In Step 701, according to the location information of the data bursts in the data channels, the data bursts passing through the node in the data channels are detected, an alarm or/and performance monitoring indication of intermediate nodes in the data channels is generated, and the alarm or/and performance monitoring indication of the intermediate nodes in the data channels is processed.

In Step 702, according to the location information of the data bursts in the data channels, the data bursts at downstream of the node in the data channels are detected, an alarm or/and performance monitoring indication of the destination node of the data channels is generated, and the alarm or/and performance monitoring indication of the destination node of the data channels is processed.

It should be noted that when the same node detects the data burst in the data channels, Steps 701 and 702 are not subject to a specific precedence sequence.

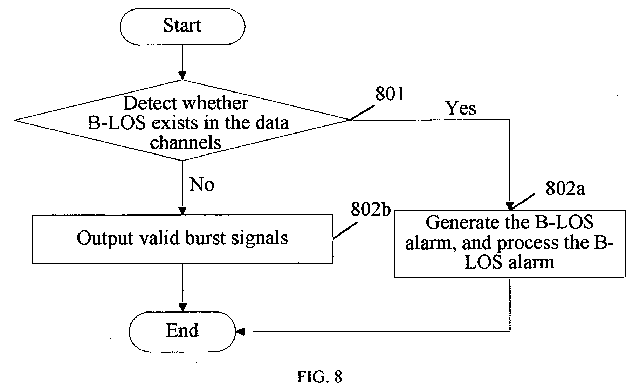

FIG. 8 is a schematic flow chart of a method for alarm and performance monitoring of intermediate nodes in the data channels according to an embodiment of the present invention. The alarm and performance monitoring of the intermediate node here is practically that when passing through each node in the ring, the data channels directly separate a small portion of optical signals from each data channel wavelength, and optical power detection is performed on each data channel in the terms of power. The processing of this portion is simple but very beneficial for guaranteeing transmission quality of the network and rapid failure location. The method for alarm and performance monitoring of intermediate nodes in the data channels includes the following steps.

In Step 801, according to the location information of the data bursts in the data channels, it is detected whether burst LOS (B-LOS) exists in the data channels. Here, as the intermediate node does not convert the optical bursts into the electric field, only optical power detection is performed here. The location information of data burst in the data channels is determined according to the BWMap in the control frames in the control channels. The location information includes start and end locations of each data burst. If no valid optical power is detected in the corresponding location regions, a B-LOS alarm is generated.

In Step 802a, when the B-LOS is detected, the B-LOS alarm is generated and the B-LOS alarm is processed. Here, the processing of the B-LOS alarm specifically includes the following steps. An OBADM module is controlled to turn on an optical switch, abandon pass-through of the transmission of the data bursts, and generate a burst AIS (B-AIS) alarm to be inserted in a downstream direction. The alarm signal facilitates the downstream nodes to locate the failure and perform corresponding processing. Also, according to the B-LOS alarm, the B-LOS alarm is reported to a master alarm processing system. It should be noted that the inserted B-AIS alarm signal sets fields B-AIS in all T-CONT BWMap items to "1 ".

In Step 802b, when no B-LOS is detected, valid burst signals are output.

It should be noted that in specific implementation, conditions of generating and canceling the B-LOS alarm and corresponding processing are as shown in Table 4.

**Table 4**

| Alarm Type | Alarm Generation Condition | Alarm Processing | Alarm Cancellation Condition | Alarm Cancellation Processing |
|---|---|---|---|---|
| B-LOS alarm | Receive no valid burst signal for continuous four times. | Generate an inserted B-AIS alarm. | Receive a valid burst signal once. | Cancel the inserted B-AIS alarm. |

As shown in Table 4, if continuously no valid data burst signal is received for four times, the data B-LOS alarm is generated and the alarm is processed. It should be noted that sequentially received data bursts are possibly from different sending source nodes, so that the continuous four times here should represent four data bursts sent by the same source node. The alarm is cancelled and corresponding processing is performed as long as the valid data burst signal is received once.

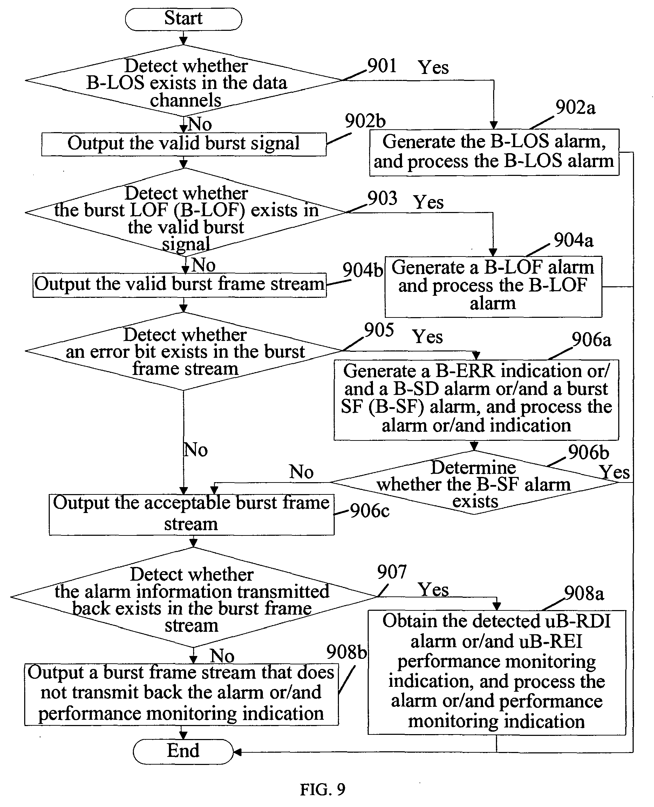

FIG. 9 is a schematic flow chart of a method for alarm and performance monitoring of destination nodes of data channels according to an embodiment of the present invention. As shown in FIG. 9, the method includes the following steps.

In Step 901, according to the location information of the data bursts in the data channels, it is detected whether B-LOS exists in the data channels. Here, when optical signals of the data channels are converted into electrical signals, optical power detection is performed on the optical signals of the received data bursts. If a failure occurs to a sending source node of the data bursts or a device such as an optical switch on a path that the data bursts pass through, the corresponding data burst signal is unable to be received, so that the B-LOS alarm is generated. It should be noted that the location information of data burst in the data channels is determined according to the BWMap in the control frames of the control channels, and the location information includes start and end locations of each data burst. If no valid optical power is detected in the corresponding location region, the B-LOS alarm is generated.

In Step 902a, when the B-LOS is detected, the B-LOS alarm is generated, and the B-LOS alarm is processed. Here, the processing of the B-LOS alarm specifically includes the following steps. A B-RDI alarm to be transmitted back in an upstream direction is generated and the B-LOS alarm is reported to the master alarm processing system. Also, the data burst is discarded. Here, this means that the time intervals of the data burst indicated by the BWMap are all set to "0" in the receiving data channels.

It should be noted that in specific implementation, conditions of generating and canceling the B-LOS alarms and corresponding processing are as shown in Table 5.

**Table 5:**

| Alarm Type | Alarm Generation Condition | Alarm Processing | Alarm Cancellation Condition | Alarm Cancellation Processing |
|---|---|---|---|---|
| B-LOS alarm | Receive no valid burst signal for continuous four times. | Transmit back B-RDI to the uplink port. | Receive a valid burst signal once. | Cancel back-transmission of B-RDI to the uplink port. |

As shown in Table 5, if no valid data burst signal is received for continuous four times, the B-LOS alarm is generated and the alarm is processed. It should be noted that the sequentially received data bursts are possibly from different sending source nodes, so that the continuous four times here should indicate four data bursts sent by the same source node. The alarm is cancelled and corresponding processing is performed as long as the valid data burst signal is received once.

In Step 902b, when no B-LOS is detected, the valid burst signal is output.

In Step 903, according to the burst frame delimitation method, it is detected whether the burst LOF (B-LOF) exists in the valid burst signal. Here, as the data frame bursts are not continuously transmitted in the data channels, and all data frame bursts also do not have fixed durations, the duration of the data burst frames can be determined according to the BWMap in the control frames. In specific implementation, it is detected whether the B-LOF exists in the valid burst signal according to the method adopting a frame delimiter (Del). The frame delimiter has a special code type and is also not scrambled in transmission.

In Step 904a, when the B-LOF is detected, a B-LOF alarm is generated and the B-LOF alarm is processed. Here, the processing of the B-LOF alarm specifically includes the following steps. The B-RDI alarm to be transmitted back in the upstream direction is generated, and the B-RDI alarm is reported to the master alarm processing system. Also, the data burst is discarded.

It should be noted that in specific implementation, conditions of generating and canceling the B-LOF alarm and corresponding processing are as shown in Table 6.

**Table 6:**

| Alarm Type | Alarm Generation Condition | Alarm Processing | Alarm Cancellation Condition | Alarm Cancellation Processing |
|---|---|---|---|---|
| B-LOF alarm | Dels of continuous four bursts are invalid. | Burstis discarded, and the B-RDI is transmitted back to the uplink port. | Receive correct Del. | Receive bursts correctly; cancel back-transmission of the B-RDI to the uplink port. |

As shown in Table 6, according to the delimiter synchronization algorithm, it it is detected that Del fields of continuous four data bursts are invalid, a data B-LOF alarm is generated and the alarm is processed. In the "data B-LOF" status, the B-LOF alarm is cancelled and corresponding processing is processed as long as the delimiter can be synchronized once.

In Step 904b, when no B-LOF is detected, the valid burst frame stream is output.

In Step 905, data check is performed on the valid burst frame stream, and it is detected whether an error bit exists in the burst frame stream. Here, the data burst frames received from the same source node are connected together to form a data stream, so as to check the data stream and the BIP-8 check method can be adopted.

In Step 906a, when the error bit is detected in the burst frame stream, the bit error rates are counted, and a performance monitoring indication or/and burst SD (B-SD) alarm or/and burst SF (B-SF) alarm for a corresponding burst error (B-ERR, burst BIP Errors) is generated according to a counted amount of the bit error rate, and the alarm or indication is processed.

It should be noted that when the error bit is detected, the B-ERR (burst BIP Errors) performance monitoring indication can be first generated and the performance monitoring indication is processed. Specifically, the B-REI performance monitoring indication to be transmitted back to the upstream node can be generated according to the accumulation number of the BIP-8 check error bit provided by the B-ERR performance monitoring indication, and also, the B-ERR performance monitoring indication is reported to the master alarm processing system.

According to the B-ERR performance monitoring indication, the B-SD alarm might be generated and the alarm is processed. Specifically, the B-SD alarm is reported to the master alarm processing system.

According to the B-ERR performance monitoring indication or/and B-SD alarm, the B-SF alarm might be generated and the B-SF alarm is processed. Here, according to the B-SF alarm, the B-RDI alarm to be transmitted back in an upstream direction can be generated, the B-SF alarm is reported to the master alarm processing system, and also, the data burst is discarded.

It should be noted that in the specific implementation, conditions of generating and canceling the B-ERR performance monitoring indication, B-SD alarm, and B-SF alarm and corresponding processing are as shown in Table 7.

**Table 7:**

| Performance Monitoring Type | Performance Monitoring Generation Condition | Performance Monitoring Processing | Performance Monitoring Cancellation Condition | Performance Monitoring Cancellation Processing |
|---|---|---|---|---|
| B-ERR performance monitoring indication | Compare the received BIP8 with the calculated BIP8; if different, add 1 in the Err counter | Different bit numbers are accumulated in the Err. Trigger B-SD or B-SF according to the corresponding threshold values. | None | None |
| Alarm Type | Alarm Generation Condition | Alarm Processing | Alarm Cancellation Condition | Alarm Cancellation Processing |
| B-SD alarm | BER ≥ 10-x 4 <= x <= 9 and x>y | None | BER <10-(x+1) | None |
| B-SF alarm | BER ≥ 10-y 3 <= y <= 8 | Set all payload areas to 0 (including the BWMap); set all PLends to 1; and transmit back the B-RDI to the uplink port. | BER <10-(y+1) | Recover the payload area to normal data; Cancel back-transmission of the B-RDI to the uplink port. |

Here, the valid burst frame stream is checked by using the BIP-8 check. Specifically, parity check is performed on all same source data streams from a BIP byte of a previous same source data burst frame to a BIP byte of a current burst frame. If at least 1 bit error exists, the B-ERR performance monitoring indication is generated. Also, the bit numbers of the errors are accumulated, so as to calculate the BER of the same source transmission data stream. If BER≥10-x, x=4∼9, and x>y, the B-SD alarm is generated; if BER≥10-y, y=3∼8, the B-SF alarm is generated. The B-SD and B-SF alarms also have their corresponding cancellation conditions and processing methods, and refer to Table 7 for details.

In Step 906b, it is determined whether the B-SF alarm exists. As the B-SF alarm is an instant interrupt alarm, if such an alarm is generated, continued forward transfer of the burst frame stream in the data channel is terminated. If the B-SF alarm does not exist, the burst frame stream in the data channel is an acceptable frame stream, which can continue to be transferred forward.

In Step 906c, when no error bit is detected or the detected error bit is within a certain range, the acceptable burst frame stream is output. Here, when the B-ERR performance monitoring indication or/and B-SD alarm is detected, the error bit that exists in the frame stream is in an acceptable range, so that the acceptable burst frame stream can be output.

In Step 907, it is detected whether the alarm or/and performance monitoring indication transmitted back to the upstream node exists in the acceptable burst frame stream.

In Step 908a, when the alarm or/and performance monitoring indication is detected, the detected uB-RDI alarm or/and uB-REI performance monitoring indication is obtained, and the alarm or/and performance monitoring indication is processed. Here, the processing of the alarm or/and performance monitoring indication is specifically as follows. An uB-REI performance monitoring indication or/and uB-RDI alarm is reported to the master alarm processing system, and the two messages are suitably processed, for example, operations such as protection switching.

In Step 908b, when no alarm or/and performance monitoring indication is detected, a frame stream that does not transmit back the alarm or/and performance monitoring indication is output.

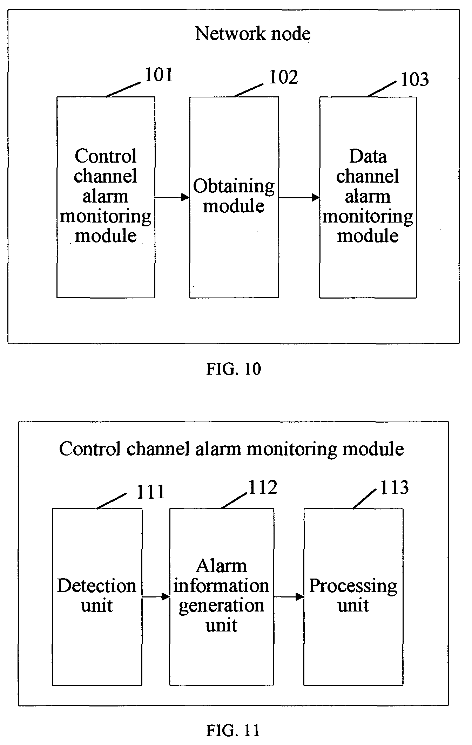

FIG. 10 is a schematic component diagram of a network node according to a first embodiment of the present invention. As shown in FIG. 10, the network node includes a control channel alarm monitoring module 101, an obtaining module 102, and a data channel alarm monitoring module 103.

The control channel alarm monitoring module 101 is configured to detect data in control channels, and generate an alarm or/and performance monitoring indication of the control channels.

The obtaining module 102 is configured to obtain BWMap information contained in the data in the control channel alarm monitoring module 101. The BWMap information carries location information of data bursts in corresponding data channels. Here, a control frame transmitted in the control channels contains a BWMap item, which indicates a location of a data burst in a data channel corresponding to the control frame. The information directly determines whether alarm processing of intermediate nodes in the data channels and alarm processing of destination nodes in the data channels can be performed.

The data channel alarm monitoring module 103 is configured to detect the data bursts in the data channels according to location information of the data bursts in the corresponding data channels in the BWMap information and generate an alarm or/and performance monitoring indication of the data channels.

For the network node in the embodiment of the present invention, during the process of performing alarm and performance monitoring on the control channels, location information of data bursts in the data channels is determined through BWMap information contained in the data in the control channels, and alarm and performance monitoring is performed on the data channels according to the location information, so that control channels and data channels cooperate to perform alarm and performance monitoring, thus realizing the alarm and performance monitoring of the control channels and data channels in an optical ring network.

FIG. 11 is a schematic component diagram of a control channel alarm monitoring module according to an embodiment of the present invention. As shown in FIG. 11, the control channel alarm monitoring module includes a detection unit 111, an alarm information generation unit 112, and a processing unit 113.

The detection unit 111 is configured to detect data in control channels, and detect whether LOS, LOF, a frame error bit, and an alarm or/and performance monitoring indication transmitted back to an upstream node exist in the control channels. Here, for the specific process of detection of the data in the control channels, refer to the description of the method for alarm and performance monitoring of control channels in the corresponding embodiment.

The alarm information generation unit 112 is configured to generate a LOS alarm when the detection unit 111 detects that a LOS exists; generate a LOF alarm when the detection unit 111 detects that a LOF exists; generate a performance monitoring indication or/and SD alarm or/and SF alarm for a corresponding error when the detection unit 111 detects that a frame error bit exists; and obtain a detected RDI alarm or/and REI performance monitoring indication when the detection unit 111 detects that an alarm or/and performance monitoring indication transmitted back to an upstream node exists. Here, for the specific process of generating or obtaining the alarm or/and performance monitoring indication, refer to the description of the method for alarm and performance monitoring of control channels in the corresponding embodiment.

The processing unit 113 is configured to generate an RDI alarm to be transmitted back to an upstream node and an AIS alarm to be inserted to a downstream node correspondingly according to the LOS alarm, LOF alarm or SF alarm generated by the alarm information generation unit 112, and also, send information of abandoning alarm and performance monitoring on data channels to a data channel node; and generate a REI performance monitoring indication to be transmitted back to an upstream node according to an ERR performance monitoring indication generated by the alarm information generation unit 112. Here, for the specific process of processing the alarm or/and performance monitoring indication, refer to the description of the method for alarm and performance monitoring of control channels in the corresponding embodiment.

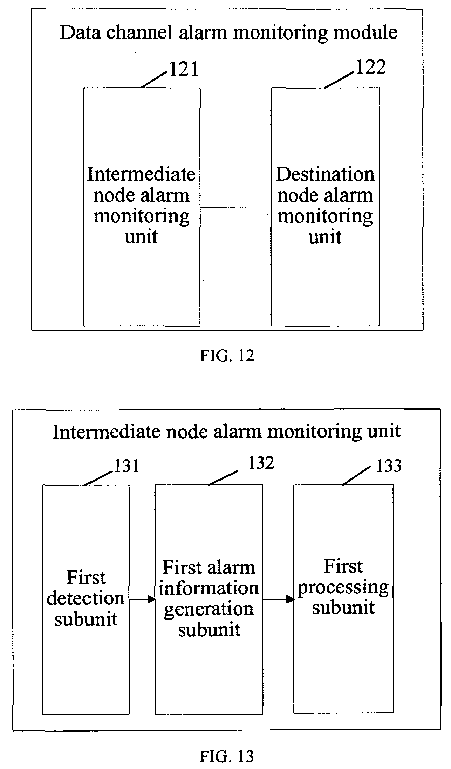

FIG. 12 is a schematic component diagram of a data channel alarm monitoring module according to an embodiment of the present invention. As shown in FIG. 12, the data channel alarm monitoring module includes an intermediate node alarm monitoring unit 121 and a destination node alarm monitoring unit 122.

The intermediate node alarm monitoring unit 121 is configured to detect data bursts passing through a current node in the data channels according to location information of data bursts in the corresponding data channels in the BWMap information, generate an alarm or/and performance monitoring indication for the intermediate nodes in the data channels, and process the alarm or/and performance monitoring indication for the intermediate nodes in the data channels. The alarm and performance monitoring for the intermediate node is practically that when passing through each node in the ring, the data channels directly separate a small portion of optical signals from each data channel wavelength. Optical power detection is performed on each data channel in the terms of power. The processing of the portion is simple but very beneficial for guaranteeing transmission quality of the network and fast failure location.

The destination node alarm monitoring unit 122 is configured to detect data bursts at downstream of the current node in the data channels according to location information of data bursts in the corresponding data channels in BWMap information, generate an alarm or/and performance monitoring indication for destination nodes in the data channels, and process the alarm or/and performance monitoring indication for the destination nodes in the data channels.

FIG. 13 is a schematic component diagram of an intermediate node alarm monitoring unit according to an embodiment of the present invention. As shown in FIG. 13, the intermediate node alarm monitoring unit includes a first detection subunit 131, a first alarm information generation subunit 132, and a first processing subunit 133.

The first detection subunit 131 is configured to detect data bursts passing through the current node in the data channels according to location information of data bursts in the data channels, and detect whether the B-LOS exists in the data channels. Here, as the intermediate node does not convert the optical burst into the electric field, only the optical power detection is performed here. Here, for the specific process of detecting data bursts in the data channels, refer to the description of the method for alarm and performance monitoring of intermediate nodes in the data channels in the corresponding embodiment.

The first alarm information generation subunit 132 is configured to generate a B-LOS alarm when the first detection subunit 131 detects that the B-LOS exists. Here, for the specific process of generating the alarm, refer to the description of the method for alarm and performance monitoring of intermediate nodes in the data channels in the corresponding embodiment.

The first processing subunit 133 is configured to control to turn on an optical switch according to the B-LOS alarm generated by the first alarm information generation subunit 132, abandon pass-through of the data bursts, and generate a B-AIS alarm inserted to the downstream node. Here, for the specific process of processing the alarm, refer to the description of the method for alarm and performance monitoring for intermediate nodes in the data channels in the corresponding embodiment.

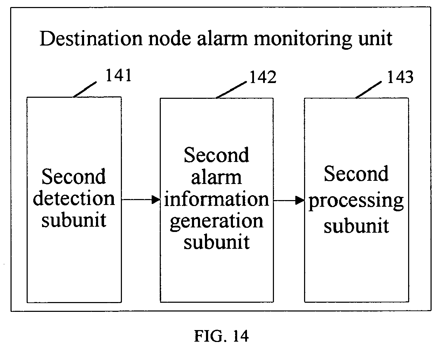

FIG. 14 is a schematic component diagram of a destination node alarm monitoring unit according to an embodiment of the present invention. As shown in FIG. 14, the destination node alarm monitoring unit includes a second detection subunit 141, a second alarm information generation subunit 142, and a second processing subunit 143.

The second detection subunit 141 is configured to detect data bursts at downstream of the current node in the data channels, and detect whether B-LOS, B-LOF, a burst frame error bit, and an alarm or/and performance monitoring indication transmitted back to an upstream node exist in the data channels respectively. Here, for the specific process of detecting the data bursts in the data channels, refer to the description of the method for alarm and performance monitoring of destination nodes in the data channels in the corresponding embodiment.

The second alarm information generation subunit 142 is configured to generate a B-LOS alarm when the second detection subunit 141 detects that a B-LOS exists; generate a B-LOF alarm when the second detection subunit 141 detects that a B-LOF exists; generate a performance monitoring indication or/and B-SD alarm or/and B-SF alarm for a corresponding B-ERR when the second detection subunit 141 detects that a burst frame error bit exists; and obtain a detected B-RDI alarm or/and B-REI performance monitoring indication when the second detection subunit 141 detects that the alarm or/and performance monitoring indication transmitted back to the upstream node exists. Here, for the specific process of generating or obtaining the alarm or/and performance monitoring indication, refer to description of the method for alarm and performance monitoring of destination nodes in the data channels in the corresponding embodiment.

The second processing subunit 143 is configured to correspondingly generate a B-RDI alarm to be transmitted back to an upstream node according to the B-LOS alarm, the B-LOF alarm or the B-SF alarm generated by the second alarm information generation subunit 142, and also discard the data burst; and generate a B-REI performance monitoring indication to be transmitted back to an upstream node according to the B-ERR performance monitoring indication generated by the second alarm information generation subunit 142. Here, for the specific process of processing an alarm or/and performance monitoring indication, refer to the description of the method for alarm and performance monitoring of destination nodes in the data channels in the corresponding embodiment.

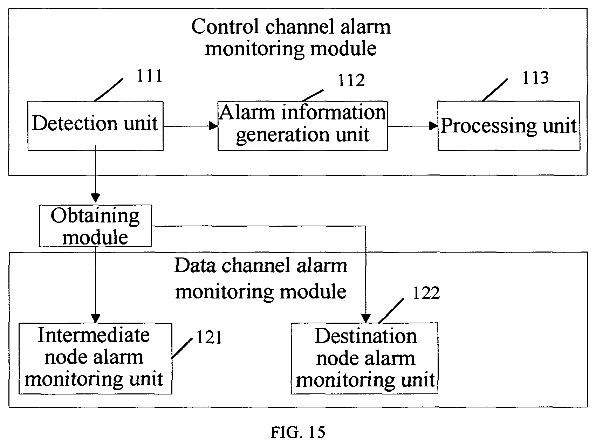

FIG. 15 is a schematic component diagram of a network node according to a second embodiment of the present invention. As shown in FIG. 15, in this embodiment, the network node includes a control channel alarm monitoring module, an obtaining module, and a data channel alarm monitoring module. In this embodiment, for functions of all modules and relations among all modules, refer to the description of the network node in the first embodiment of the present invention. In this embodiment, for functions of and relations among all units in the control channel alarm monitoring module, refer to the description of the control channel alarm monitoring module in the embodiment of the present invention, and for functions of and relations among all units in the data channel alarm monitoring module in this embodiment, refer to the description of the data channel alarm monitoring module in the embodiment of the present invention.

A specific embodiment is described in detail in the following.

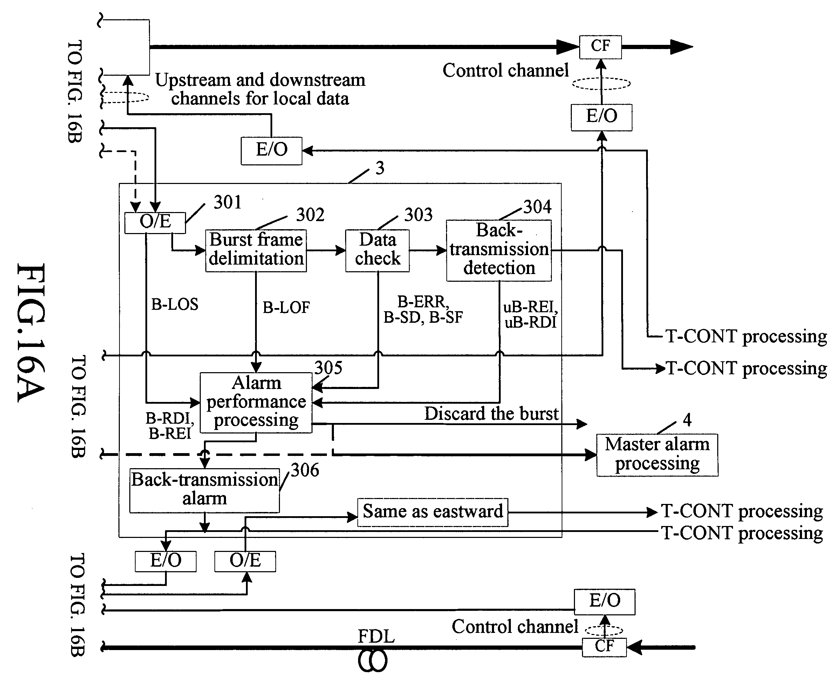

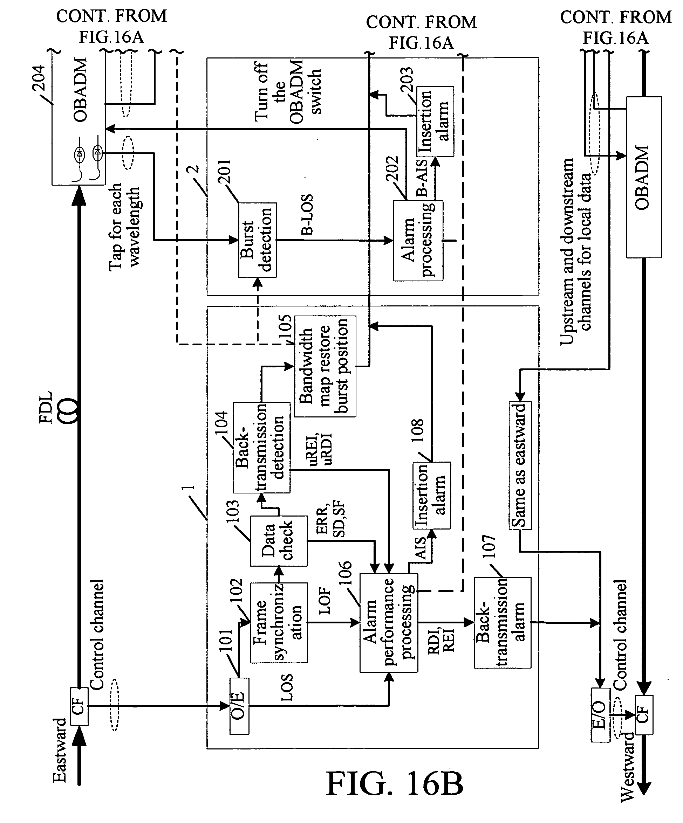

FIG. 16 is a function structure and signal processing diagram of a network node according to an embodiment of the present invention.

An alarm and performance monitoring system for a network node includes three portions: a control channel alarm monitoring module 1, a data channel intermediate node alarm monitoring module 2, and a data channel destination node alarm monitoring module 3. The network node supports synchronous communication of eastward and westward optical fibers. In FIG. 16, only functional modules and processing procedure of alarm and performance monitoring for the optical fiber for eastward transmission are drawn, and the optical fiber for the westward transmission also has similar structure. Each module, the function of each unit in each module, and signal processing procedureare introduced in the following respectively. It should be noted that the units having the same names in the following can be differentiated with different numerals.

The control channel alarm monitoring module 1 performs alarm and performance monitoring on the control channels as follows.

When converting optical signals in the control channels into electrical signals, an O/E unit (or referred to as a photoelectric conversion unit) 101 performs optical power detection on the received optical signals in the control channels. If a failure occurs to an upstream node or a path, the detected optical power is lower than its sensitiveness, and a LOS alarm is generated. An alarm performance processing unit 106 performs processing according to the LOS alarm as follows: generating an RDI alarm to be transmitted back to an upstream and an inserted AIS alarm to be transferred in a downstream direction, reporting the LOS alarm to a master alarm processing system 4, and sending control information of abandoning detection of data bursts of the data channels to the data channels. It should be noted that the RDI alarm is transmitted back to the upstream through a back-transmission alarm unit 107, that is, transmitted to the upstream through the westward optical fiber. As for the AIS alarm, the inserted message is placed in the control frame through an insertion alarm unit 108, so as to be inserted for transfer in the downstream direction.

A frame synchronization detection unit 102 detects whether a LOF exists in the valid signal according to a frame synchronization algorithm when the O/E unit 101 detects that the LOS does not exist and outputs the valid signal. Here, specifically, it is detected whether the LOF exists in the signal by searching a frame synchronization code in the signal. The frame synchronization code has a special code type, is not scrambled, and usually occupies 4 bytes, and the code type is 0xB6AB31E0 (the code type is used in both the SDH and GPON). As the frame duration is determined, according to the frame synchronization algorithm, if no valid frame synchronization code is found in one or multiple continuous frames, a LOF alarm is generated. The alarm performance processing unit 106 performs processing according to the LOF alarm as follows: generating an RDI alarm to be transmitted back in an upstream direction and an inserted AIS alarm to be transferred in a downstream direction, reporting the LOF alarm to the master alarm processing system 4, and sending control information of abandoning detection of the data of the data channels to the data channels. It should be noted that the RDI alarm is transmitted back to the upstream through the back-transmission alarm unit 107, that is, transmitted to the upstream through the westward optical fiber. As for the AIS alarm, the inserted message is placed in the control frame through the insertion alarm unit 108, so as to be inserted for transfer in the downstream direction.

The data check unit 103 performs data check on the valid frame stream after the frame synchronization detection unit 102 detects that no LOF exists and outputs the valid frame stream, so as to detect whether an error bit exists in the frame stream. Here, a BIP-8 check method can be adopted for the check of the frame stream, the bit error rate is counted, and a corresponding ERR performance monitoring indication or/and SD alarm or/and SF alarm is generated according to an amount of the counted bit error rate. The alarm performance processing unit 106 processes the alarm or/and performance monitoring indication as follows. When the performance monitoring indication is the ERR performance monitoring indication, the alarm performance processing unit 106 can generate a REI performance monitoring indication to be transmitted back to an upstream node according to an accumulation number of the BIP-8 check error bit provided by the ERR performance monitoring indication, and report the ERR performance monitoring indication to the master alarm processing system 4. If the alarm is an SD alarm, the alarm performance processing unit 106 reports the SD alarm to the master alarm processing system 4. If the alarm is the SF alarm, the alarm performance processing unit 106 can generate a RDI alarm to be transmitted back in an upstream direction and an inserted AIS alarm to be transferred in a downstream direction, also, report the SF alarm to the master alarm processing system 4, and send control information of abandoning detection of the data in the data channels to the data channels. It should be noted that the REI performance monitoring indication or/and RDI alarm is transmitted back to the upstream through the back-transmission alarm unit 107, that is, transmitted to the upstream through the westward optical fiber. As for the AIS alarm, the insertion alarm unit 108 places the inserted message into the control frame, so that the inserted message is inserted for transfer in the downstream direction.

A back-transmission detection unit 104 detects whether an alarm or/and performance monitoring indication transmitted back to the upstream node exists in an acceptable frame stream after the data check unit 103 outputs the acceptable frame stream when detecting that no error bit exists or an error bit in a certain range exists in the frame stream. If the alarm or/and performance monitoring indication is detected, the detected uRDI alarm or/and uREI performance monitoring indication is obtained. The alarm performance processing unit 106 processes the alarm or/and performance monitoring indication as follows: reporting the uREI performance monitoring indication or/and uRD alarm to the master alarm processing system 4, and performing suitable processing on the two messages, for example, operations such as protection switching. It should be noted that the detected RDI alarm or/and uREI performance monitoring indication do not influence the data transmission.

The BWMap processing unit 105 obtains BWMap information in control frames in the control channels. The BWMap information carries location information of data bursts in the corresponding data channels. Here, the control frames in the control channels contain BWMap items, which indicate locations of data bursts in the data channels corresponding to the control frames. The BWMap processing unit 105 transfers the obtained BWMap information to the data channel intermediate node alarm monitoring module 2 and the data channel destination node alarm monitoring module 3, so as to instruct them to locate data bursts.

It should be noted that the LOS alarm generated by the O/E unit 101, the LOF alarm generated by the frame synchronization detection unit 102, and SF alarm generated by the data check unit 103 are all instant interrupt alarms. That is to say, if such an alarm is generated, continued forward transfer of data of the control channels is terminated. The ERR performance monitoring indication and SD alarm generated by the data check unit 103 and the uREI or/and uRDI alarm detected by the back-transmission detection unit 104 do not influence continued transfer of the data of the control channels.

The data channel intermediate node alarm monitoring module 2 performs alarm and performance monitoring on the control channels as follows.

The burst detection unit 201 detects data bursts passing through the current node in the data channels according to the location information of data bursts in the data channels, detects whether a B-LOS exists in the data channels. Here, as the intermediate node does not convert the optical bursts into the electric field, only optical power detection is performed here. The location information includes start and end locations of each data burst. If no valid optical power is detected in the corresponding location region, a B-LOS alarm is generated. The alarm processing unit 202 processes the B-LOS alarm as follows: controlling an OBADM module to turn on an optical switch, abandoning pass-through of the transmission of the data bursts, generating a B-AIS alarm to be inserted in a downstream direction, and reporting the B-LOS alarm to the master alarm processing system 4. When the burst detection unit 201 detects that the B-LOS does not exist, a valid burst signal is output. It should be noted that in the AIS alarm the insertion alarm unit 203 places the inserted message in the control channels control frame for transfer in the downstream direction.

The data channel destination node alarm monitoring module 3 performs alarm and performance monitoring on the control channels as follows.

The O/E unit 301 performs optical power detection on received optical signals of data bursts when converting optical signals at downstream of the current node in the data channels into electrical signals according to the location information of the data bursts in the data channels. If a failure occurs to a sending source node of the data bursts or a device on the path that the data bursts pass through such as an optical switch, corresponding data burst signals cannot be received, so that a B-LOS alarm is generated. The alarm performance processing unit 305 processes the B-LOS alarm as follows: generating a B-RDI alarm to be transmitted back in an upstream direction, reporting a B-LOS alarm to the master alarm processing system 4, and also discarding the data bursts. It should be noted that the B-RDI alarm is transmitted back to the upstream through the back-transmission alarm unit 306.

The burst frame delimitation unit 302 detects whether a B-LOF exists in a valid burst signal according to a burst frame delimitation method when the O/E unit 301 detects that no B-LOS exists and outputs the valid burst signal. Here, as the data frame bursts are not continuously transmitted in the data channels and also not all data frame bursts have fixed durations, the duration of the data burst frame can be determined according to the BWMap in the control frame. In specific implementation, it is detected whether the B-LOF exists in the valid burst signal according to the frame delimiter (Del) method. When the B-LOF is detected, a B-LOF alarm is generated. The alarm performance processing unit 305 processes the alarm as follows: generating a B-RDI alarm to be transmitted back in the upstream direction, reporting the B-RDI alarm to the master alarm processing system 4, and also discarding the data bursts. It should be noted that the B-RDI alarm is transmitted back to the upstream through the back-transmission alarm unit 306.

The data check unit 303 performs data check on a valid burst frame stream after the burst frame delimitation unit 302 detects that no B-LOF exists and outputs the valid burst frame stream, so as to detect whether an error bit exists in the burst frame stream. When the error bit is detected in the burst frame stream, the bit error rate is counted, and a corresponding B-ERR performance monitoring indication or/and a B-SD alarm or/and B-SF alarm is generated according to an amount of the counted bit error rate. The alarm performance processing unit 305 processes the performance monitoring indication or alarm as follows. When the alarm is the B-ERR performance monitoring indication, the alarm performance processing unit 305 generates a B-REI performance monitoring indication to be transmitted back to the upstream node according to an accumulation number of the BIP-8 check error bit provided in the B-ERR performance monitoring indication, and reports the B-ERR performance monitoring indication to the master alarm processing system 4. If the alarm is the B-SD alarm, the alarm performance processing unit 305 reports the B-SD alarm to the master alarm processing system 4. If the alarm is the B-SF alarm, the alarm performance processing unit 305 generates a B-RDI alarm to be transmitted back in the upstream direction, reports the B-SF alarm to the master alarm processing system 4, and also, discards the data bursts. It should be noted that the B-ERR performance monitoring indication or/and B-RDI alarm is transmitted back to the upstream through the back-transmission alarm unit 306.

The back-transmission detection unit 304 detects whether an alarm or/and performance monitoring indication transmitted back to the upstream node exists in an acceptable burst frame stream after the data check unit 303 outputs the acceptable burst frame stream when detecting that no error bit exists stream or an error bit in a certain range exists in the burst frame. If the alarm or/and performance monitoring indication is detected, the detected uB-RDI alarm or/and uB-REI performance monitoring indication is obtained. The alarm performance processing unit 305 processes the alarm or/and performance monitoring indication as follows: reporting the uB-REI performance monitoring indication or/and uB-RDI alarm to the master alarm processing system 4, and performing suitable processing on the two messages, for example, operations such as protection switching.

It should be noted that the B-LOS alarm generated by the O/E unit 301, the B-LOF alarm generated by the burst frame delimitation unit 302, and the B-SF alarm generated by the data check unit 303 are all instant interrupt alarms. That is to say, if such an alarm is generated, continued forward transfer of the data bursts in the data channels is terminated. The B-ERR performance monitoring indication and the B-SD alarm generated by the data check unit 303 and the uB-REI or/and the uB-RDI alarm detected by the back-transmision detection unit 304 do not influence continued transfer of the data burst in the data channels.

In the method for alarm and performance monitoring and the network node according to the embodiments of the present invention, during the process of performing alarm and performance monitoring on the control channels, through the BWMap information contained in the data of the control channels, the location information of data bursts in the data channels is determined, the alarm and performance monitoring are performed on the data channels according to the location information, so that the control channels and the data channels cooperate to perform the alarm and performance monitoring, thus realizing the alarm and performance monitoring of the control channels and data channels in an optical ring network.

The contents disclosed above are merely preferred embodiments of the present invention, which are not intended to be used to limit the scope of the present invention.

## Claims

1. A method for alarm and performance monitoring, comprising:
detecting (501) data of a control channel, and generating an alarm or/and performance monitoring indication of the control channel;
the method being **characterized by**
obtaining (502) bandwidth map, BWMap, information contained in the data of the control channel, wherein the BWMap information carries location information of data bursts in corresponding data channels; and
detecting (503) the data bursts in the data channels according to the location information of the data bursts in the data channels, and generating an alarm or/and performance monitoring indication of the data channels.

2. The method according to claim 1, wherein the detecting the data of the control channel, and generating the alarm or/and performance monitoring indication of the control channel comprise:
detecting the data in the control channel, and detecting whether (601) loss of signal, LOS, (603) loss of frame, LOF, (605) a frame error bit, and (607) an alarm or/and performance monitoring indication transmitted back to an upstream node exist in the control channel;
when the LOS is detected, generating (602a) an LOS alarm;
when LOF is detected, generating (604a) an LOF alarm;
when the frame error bit is detected, generating (606a) a corresponding error, ERR, performance monitoring indication or/and a signal degrade, SD, alarm or/and a signal fail, SF, alarm; and
when the alarm or/and performance monitoring indication transmitted back to the upstream node is detected, obtaining (608a) a detected remote defect indication, RDI, alarm or/and a detected remote error indication, REI, performance monitoring indication.

3. The method according to claim 2, wherein after the detecting the data in the control channel, and generating the alarm or/and performance monitoring indication of the control channel, the method further comprises processing the alarm or/and performance monitoring indication of the control channel, comprising:
generating (602a, 604a, 606a) an RDI alarm to be transmitted back to the upstream node, and an alarm indication signal, AIS, alarm to be inserted to a downstream node correspondingly according to the LOS alarm, the LOF alarm, or the SF alarm, and also, sending information of abandoning the alarm and performance monitoring of the data channels to nodes of the data channels; and
generating (606a) a REI performance monitoring indication to be transmitted back to the upstream node according to the ERR performance monitoring indication.

4. The method according to claim 1, wherein after the detecting the data bursts in the data channels according to the location information of the data bursts in the data channels, and generating the alarm or/and performance monitoring indication of the data channels, the method further comprises processing the alarm or/and performance monitoring indication of the data channels, comprising:
according to the location information of the data bursts in the data channels, detecting (701) the data bursts passing through a current node in the data channels, generating an alarm or/and performance monitoring indication of intermediate nodes in the data channels, and processing the alarm or/and performance monitoring indication of the intermediate nodes in the data channels; and
according to the location information of the data bursts in the data channels, detecting (702) data bursts at downstream of the current node in the data channels, generating an alarm or/and performance monitoring indication of destination nodes in the data channels, and processing the alarm or/and performance monitoring indication of the destination nodes in the data channels.

5. The method according to claim 4, wherein the according to the location information of the data bursts in the data channels, detecting the data burst passing through the current node in the data channels, generating the alarm or/and performance monitoring indication of the intermediate nodes in the data channels comprise:
according to the location information of the data bursts in the data channels, detecting (801) the data bursts passing through the current node in the data channels, so as to detect whether burst loss of signal, B-LOS, exists in the corresponding data channels;
when the B-LOS is detected, generating (802a) a B-LOS alarm.

6. The method according to claim 5, wherein the processing the alarm or/and performance monitoring indication of the intermediate nodes in the data channels comprises:
according to the B-LOS alarm, controlling (802a) to turn on an optical switch, abandoning pass-through of the data bursts, and generating a burst alarm indication signal, B-AIS, alarm inserted to the downstream node.

7. The method according to claim 4, wherein the according to the location information of the data bursts in the data channels, detecting the data bursts at the downstream of the current node in the data channels, and generating the alarm or/and performance monitoring indication of the destination nodes in the data channels comprise:
detecting the data bursts at the downstream of the current node in the data channels, so as to detect whether (901) burst loss of signal, B-LOS, (903) burst loss of frame, B-LOF, (905) a burst frame error bit, and (907) an alarm or/and performance monitoring indication transmitted back to an upstream node exist in the data channels respectively;
when the B-LOS is detected, generating (902a) a B-LOS alarm;
when the B-LOF is detected, generating (904a) a B-LOF alarm;
when a burst frame error bit is detected, generating (906a) a corresponding burst error, B-ERR, performance monitoring indication or/and a burst signal degrade, B-SD, alarm or/and a burst signal fail, B-SF, alarm;
when the alarm or/and performance monitoring indication transmitted back to the upstream node is detected, obtaining (908a) a detected burst RDI, B-RDI, alarm or/and a detected burst REI, B-REI, performance monitoring indication.

8. The method according to claim 7, wherein the processing the alarm or/and performance monitoring indication of the destination nodes in the data channels comprises:
according to the B-LOS alarm, B-LOF alarm or the B-SF alarm, generating (902a, 904a, 906a) the B-RDI alarm to be transmitted back to the upstream node correspondingly, and also, discarding the data bursts;
according to the B-ERR performance monitoring indication, generating (906a) the B-REI performance monitoring indication to be transmitted back to the upstream node.

9. A network node, comprising:
a control channel alarm monitoring module (101), configured to detect data in a control channel, and generate an alarm or/and performance monitoring indication of the control channel;
the network node being **characterized by**
an obtaining module (102), configured to obtain bandwidth map, BWMap, information contained in data in the control channel alarm monitoring module, wherein the BWMap information carries location information of data bursts in corresponding data channels; and
a data channel alarm monitoring module (103), configured to detect the data burst in the data channels according to location information of data bursts in the corresponding data channels in the BWMap information, and generate an alarm or/and performance monitoring indication of the data channels.

10. The network node according to claim 9, wherein the control channel alarm monitoring module comprises:
a detection unit (111), configured to detect the data in the control channel, so as to detect whether loss of signal, LOS, loss of frame, LOF, a frame error bit, and an alarm or/and performance monitoring indication transmitted back to an upstream node exist in the control channel respectively;
an alarm information generation unit (112), configured to generate an LOS alarm when the detection unit detects that the LOS exists; generate an LOF alarm when the detection unit detects that the LOF exists; generate a corresponding error, ERR, performance monitoring indication or/and a signal degrade, SF, alarm or/and a signal fail, SF, alarm when the detection unit detects that the frame error bit exists; and obtain a detected remote defect indication, RDI, alarm or/and remote error indication, REI, performance monitoring indication when the detection unit detects that the alarm or/and performance monitoring indication transmitted back to the upstream node exists;
a processing unit (113), configured to correspondingly generate an RDI alarm to be transmitted back to the upstream node and an alarm indication signal, AIS, alarm to be inserted to the downstream node according to the LOS alarm, the LOF alarm or the SF alarm generated by the alarm information generation unit, and also, send information of abandoning alarm and performance monitoring of data channels to nodes in the data channels; generate a REI performance monitoring indication to be transmitted back to the upstream node according to the ERR performance monitoring indication generated by the alarm information generation unit.

11. The network node according to claim 9, wherein the data channel alarm monitoring module comprises:
an intermediate node alarm monitoring unit (121), configured to detect data bursts passing through the current node in the data channels according to the location information of data bursts in the corresponding data channels in the BWMap information, generate the alarm or/and performance monitoring indication of the intermediate nodes in the data channels, and process the alarm or/and performance monitoring indication of the intermediate nodes in the data channels;
a destination node alarm monitoring unit (122), configured to detect data bursts at downstream of the current node in the data channels according to the location information of data bursts in the corresponding data channels in the BWMap information, generate an alarm or/and performance monitoring indication of the destination nodes of the data channels, and process the alarm or/and performance monitoring indication of the destination nodes in the data channels.

12. The network node according to claim 11, wherein the intermediate node alarm monitoring unit comprises:
a first detection subunit (131), configured to detect data bursts passing through the current node in the data channels according to the location information of data bursts in the data channels, so as to detect whether burst loss of signal, B-LOS, exists in the corresponding data channels;
a first alarm information generation subunit (132), configured to generate a B-LOS alarm when the first detection subunit detects that the B-LOS exists;
a first processing subunit (133), configured to control to turn on an optical switch, abandon pass-through of the data bursts, and generate a burst alarm indication signal, B-AIS, alarm to be inserted to the downstream node, according to the B-LOS alarm generated by the first alarm information generation subunit.

13. The network node according to claim 11, wherein the destination node alarm monitoring unit comprises:
a second detection subunit (141), configured to detect data bursts at downstream of the current node in the data channels, so as to detect whether burst loss of signal, B-LOS" burst loss of frame, B-LOF,, a burst frame error bit, and an alarm or/and performance monitoring indication transmitted back to an upstream node exist in the data channels respectively;
a second alarm information generation subunit (142), configured to generate a B-LOS alarm when the second detection subunit detects that the B-LOS exists; generate a B-LOF alarm when the second detection subunit detects that the B-LOF exists; generate a corresponding burst error, B-ERR, performance monitoring indication or/and burst signal degrade, B-SD, alarm or/and burst signal fail, B-SF, alarm when the second detection subunit detects that the burst frame error bit exists; and obtain a detected burst RDI, B-RDI, alarm or/and a burst REI, B-REI, performance monitoring indication when the second detection subunit detects that the alarm or/and performance monitoring indication transmitted back to the upstream node exists; and
a second processing subunit (143), configured to correspondingly generate the B-RDI alarm to be transmitted back to the upstream node according to the B-LOS alarm, B-LOF alarm or B-SF alarm generated by the second alarm information generation subunit, and also, discard the data bursts; generate the B-REI performance monitoring indication to be transmitted back to the upstream node according to the B-ERR performance monitoring indication generated by the second alarm information generation subunit.

## Patentansprüche

1. Verfahren für Alarm und Leistungsüberwachung, umfassend:
Detektieren (501) von Daten eines Steuerkanals und Erzeugen eines Alarms und/oder einer Leistungsüberwachungsangabe des Steuerkanals;
das Verfahren **gekennzeichnet durch** Erlangen (502) von Bandbreitenabbild- bzw. BWMap-Informationen, die in den Daten des Steuerkanals enthalten sind, wobei die BWMap-Informationen Ortsinformationen von Datenbündeln in korrespondierenden Datenkanälen tragen; und
Detektieren (503) der Datenbündel in den Datenkanälen gemäß den Ortsinformationen der Datenbündel in den Datenkanälen und Erzeugen eines Alarms und/oder einer Leistungsüberwachungsangabe der Datenkanäle.

2. Verfahren nach Anspruch 1, wobei das Detektieren der Daten des Steuerkanals und Erzeugen des Alarms und/oder der Leistungsüberwachungsangabe des Steuerkanals umfassen:
Detektieren der Daten in dem Steuerkanal und Detektieren, ob (601) Verlust des Signals, LOS, (603) Verlust des Rahmens, LOF, (605) ein Rahmenfehlerbit und (607) ein Alarm und/oder eine Leistungsüberwachungsangabe, zurück an einen vorgeschalteten Knoten übertragen, in dem Steuerkanal vorhanden sind;
wenn der LOS detektiert wird, Erzeugen (602a) eines LOS-Alarms;
wenn LOF detektiert wird, Erzeugen (604a) eines LOF-Alarms;
wenn das Rahmenfehlerbit detektiert wird, Erzeugen (606a) einer korrespondierenden Fehler- bzw. ERR-Leistungsüberwachungsangabe und/oder eines Signalminderungs- bzw. SD-Alarms und/oder eines Signalausfall- bzw. SF-Alarms; und
wenn der/die zurück an den vorgeschalteten Knoten übertragene Alarm und/oder Leistungsüberwachungsangabe detektiert wird, Erlangen (608a) eines Alarms einer detektierten entfernten Defektangabe, RDI, und/oder einer Leistungsüberwachungsangabe einer detektierten entfernten Fehlerangabe, REI.

3. Verfahren nach Anspruch 2, wobei das Verfahren nach dem Detektieren der Daten in dem Steuerkanal und Erzeugen des Alarms und/oder der Leistungsüberwachungsangabe des Steuerkanals ferner umfasst, den Alarm und/oder die Leistungsüberwachungsangabe des Steuerkanals zu verarbeiten, umfassend:
Erzeugen (602a, 604a, 606a) eines RDI-Alarms, der zurück an den vorgeschalteten Knoten zu übertragen ist, und eines Alarmangabesignal- bzw. AIS-Alarms, der in einen nachgeschalteten Knoten korrespondierend gemäß dem LOS-Alarm, dem LOF-Alarm oder dem SF-Alarm einzufügen ist, und außerdem Senden von Informationen über Fallenlassen des Alarms und der Leistungsüberwachung der Datenkanäle an Knoten der Datenkanäle; und
Erzeugen (606a) einer REI-Leistungsüberwachungsangabe, die zurück an den vorgeschalteten Knoten zu übertragen ist, gemäß der ERR-Leistungsüberwachungsangabe.

4. Verfahren nach Anspruch 1, wobei das Verfahren nach dem Detektieren der Datenbündel in den Datenkanälen gemäß den Ortsinformationen der Datenbündel in den Datenkanälen und Erzeugen des Alarms und/oder der Leistungsüberwachungsangabe der Datenkanäle ferner umfasst, den Alarm und/oder die Leistungsüberwachungsangabe der Datenkanäle zu verarbeiten, umfassend:
gemäß den Ortsinformationen der Datenbündel in den Datenkanälen Detektieren (701) der Datenbündel, die einen gegenwärtigen Knoten in den Datenkanälen durchlaufen, Erzeugen eines Alarms und/oder einer Leistungsüberwachungsangabe von zwischenliegenden Knoten in den Datenkanälen und Verarbeiten des Alarms und/oder der Leistungsüberwachungsangabe der zwischenliegenden Knoten in den Datenkanälen; und
gemäß den Ortsinformationen der Datenbündel in den Datenkanälen Detektieren (702) von Datenbündeln nachgeschaltet dem gegenwärtigen Knoten in den Datenkanälen, Erzeugen eines Alarms und/oder einer Leistungsüberwachungsangabe von Zielknoten in den Datenkanälen und Verarbeiten des Alarms und/oder der Leistungsüberwachungsangabe der Zielknoten in den Datenkanälen.

5. Verfahren nach Anspruch 4, wobei das Detektieren der Datenbündel gemäß den Ortsinformationen der Datenbündel in den Datenkanälen, die den gegenwärtigen Knoten in den Datenkanälen durchlaufen, Erzeugen des Alarms und/oder der Leistungsüberwachungsangabe der zwischenliegenden Knoten in den Datenkanälen umfassen:
gemäß den Ortsinformationen der Datenbündel in den Datenkanälen Detektieren (801) der Datenbündel, die den gegenwärtigen Knoten in den Datenkanälen durchlauf, um zu detektieren, ob Bündelverlust des Signals, B-LOS, in den korrespondierenden Datenkanälen vorhanden ist;
wenn der B-LOS detektiert wird, Erzeugen (802a) eines B-LOS-Alarms.

6. Verfahren nach Anspruch 5, wobei das Verarbeiten des Alarms und/oder der Leistungsüberwachungsangabe der zwischenliegenden Knoten in den Datenkanälen umfasst:
gemäß dem B-LOS-Alarm Steuern (802a) zum Einschalten eines optischen Schalters, Fallenlassen von Durchlaufen der Datenbündel und Erzeugen eines Bündelalarmangabesignal- bzw. B-AIS-Alarms, eingefügt in den nachgeschalteten Knoten.

7. Verfahren nach Anspruch 4, wobei das Detektieren der Datenbündel nachgeschaltet dem gegenwärtigen Knoten in den Datenkanälen gemäß den Ortsinformationen der Datenbündel in den Datenkanälen und Erzeugen des Alarms und/oder der Leistungsüberwachungsangabe der Zielknoten in den Datenkanälen umfassen:
Detektieren der Datenbündel nachgeschaltet dem gegenwärtigen Knoten in den Datenkanälen, um zu detektieren, ob (901) Bündelverlust des Signals, B-LOS, (903) Bündelverlust des Rahmens, B-LOF, (905) ein Bündel-Rahmenfehlerbit und (907) ein Alarm und/oder eine Leistungsüberwachungsangabe, zurück an einen vorgeschalteten Knoten übertragen, jeweils in den Datenkanälen vorhanden ist;
wenn der B-LOS detektiert wird, Erzeugen (902a) eines B-LOS-Alarms;
wenn der B-LOF detektiert wird, Erzeugen (904a) eines B-LOF-Alarms;
wenn ein Bündel-Rahmenfehlerbit detektiert wird, Erzeugen (906a) einer korrespondierenden Bündelfehler- bzw. B-ERR-Leistungsüberwachungsangabe und/oder eines Bündelsignalminderung- bzw. B-SD-Alarms und/oder eines Bündelsignalausfall- bzw. B-SF-Alarm;
wenn der/die zurück an den vorgeschalteten Knoten übertragene Alarm und/oder Leistungsüberwachungsangabe detektiert wird, Erlangen (908a) eines detektierten Bündel-RDI- bzw. B-RDI-Alarms und/oder einer detektierten Bündel-REI- bzw. B-REI-Leistungsüberwachungsangabe.

8. Verfahren nach Anspruch 7, wobei das Verarbeiten des Alarms und/oder der Leistungsüberwachungsangabe der Zielknoten in den Datenkanälen umfassen:
gemäß dem B-LOS-Alarm, B-LOF-Alarm oder B-SF-Alarm Erzeugen (902a, 904a, 906a) des B-RDI-Alarms, der korrespondierend zurück an den vorgeschalteten Knoten zu übertragen ist, und außerdem Verwerfen der Datenbündel;
gemäß der B-ERR-Leistungsüberwachungsangabe Erzeugen (906a) der B-REI-Leistungsüberwachungsangabe, die zurück an den vorgeschalteten Knoten zu übertragen ist.

9. Netzwerkknoten, umfassend:
ein Steuerkanalalarm-Überwachungsmodul (101), konfiguriert zum Detektieren von Daten in einem Steuerkanal und Erzeugen eines Alarms und/oder einer Leistungsüberwachungsangabe des Steuerkanals;
der Netzwerkknoten **gekennzeichnet durch** ein Erlangungsmodul (102), konfiguriert zum Erlangen von Bandbreitenabbild- bzw. BWMap-Informationen, die in den Daten in dem Steuerkanalalarm-Überwachungsmoduls enthalten sind, wobei die BWMap-Informationen Ortsinformationen von Datenbündeln in korrespondierenden Datenkanälen tragen; und
ein Datenkanalalarm-Überwachungsmodul (103), konfiguriert zum Detektieren des Datenbündels in den Datenkanälen gemäß den Ortsinformationen der Datenbündel in den korrespondierenden Datenkanälen in den BWMap-Informationen und Erzeugen eines Alarms und/oder einer Leistungsüberwachungsangabe der Datenkanäle.

10. Netzwerkknoten nach Anspruch 9, wobei das Steuerkanalalarm-Überwachungsmodul umfasst:
eine Detektionseinheit (111), konfiguriert zum Detektieren der Daten in dem Steuerkanal, um zu detektieren, ob Verlust des Signals, LOS, Verlust des Rahmens, LOF, ein Rahmenfehlerbit und ein Alarm und/oder eine Leistungsüberwachungsangabe, zurück an einen vorgeschalteten Knoten übertragen, jeweils in dem Steuerkanal vorhanden sind;
eine Alarminformationen-Erzeugungseinheit (112), konfiguriert zum Erzeugen eines LOS-Alarms, wenn die Detektionseinheit detektiert, dass der LOS vorhanden ist; Erzeugen eines LOF-Alarms, wenn die Detektionseinheit detektiert, dass der LOF vorhanden ist; Erzeugen einer korrespondierenden Fehler- bzw. ERR-Leistungsüberwachungsangabe und/oder eines Signalminderungs- bzw. SD-Alarms und/oder eines Signalausfall- bzw. SF-Alarms; wenn die Detektionseinheit detektiert, dass das Rahmenfehlerbit vorhanden ist; und Erlangen eines Alarms einer detektierten entfernten Defektangabe, RDI, und/oder einer Leistungsüberwachungsangabe einer entfernten Fehlerangabe, REI, wenn die Detektionseinheit detektiert, dass der/die zurück an den vorgeschalteten Knoten übertragene Alarm und/oder Leistungsüberwachungsangabe vorhanden ist;
eine Verarbeitungseinheit (113), konfiguriert zum korrespondierenden Erzeugen eines RDI-Alarms, der zurück an den vorgeschalteten Knoten zu übertragen ist, und eines Alarmangabesignal- bzw. AIS-Alarms, der in den nachgeschalteten Knoten gemäß dem LOS-Alarm, dem LOF-Alarm oder dem SF-Alarm, erzeugt von der Alarminformationen-Erzeugungseinheit, einzufügen ist, und außerdem Senden von Informationen über Fallenlassen des Alarms und der Leistungsüberwachung der Datenkanäle an Knoten in den Datenkanälen; Erzeugen einer REI-Leistungsüberwachungsangabe, die zurück an den vorgeschalteten Knoten zu übertragen ist, gemäß der ERR-Leistungsüberwachungsangabe, erzeugt von der Alarminformationen-Erzeugungseinheit.

11. Netzwerkknoten nach Anspruch 9, wobei das Datenkanalalarm-Überwachungsmodul umfasst:
eine Zwischenknotenalarm-Überwachungseinheit (121), konfiguriert zum Detektieren von Datenbündeln, die den gegenwärtigen Knoten in den Datenkanälen durchlaufen, gemäß den Ortsinformationen von Datenbündeln in den korrespondierenden Datenkanälen in den BWMap-Informationen, Erzeugen des Alarms und/oder der Leistungsüberwachungsangabe der zwischenliegenden Knoten in den Datenkanälen und Verarbeiten des Alarms und/oder der Leistungsüberwachungsangabe der zwischenliegenden Knoten in den Datenkanälen;
eine Zielknotenalarm-Überwachungseinheit (122), konfiguriert zum Detektieren von Datenbündeln nachgeschaltet dem gegenwärtigen Knoten in den Datenkanälen, gemäß den Ortsinformationen von Datenbündeln in den korrespondierenden Datenkanälen in den BWMap-Informationen, Erzeugen eines Alarms und/oder einer Leistungsüberwachungsangabe der Zielknoten der Datenkanäle und Verarbeiten des Alarms und/oder der Leistungsüberwachungsangabe der Zielknoten in den Datenkanälen.

12. Netzwerkknoten nach Anspruch 11, wobei die Zwischenknotenalarm-Überwachungseinheit umfasst:
eine erste Detektionsuntereinheit (131), konfiguriert zum Detektieren von Datenbündeln, die den gegenwärtigen Knoten in den Datenkanälen durchlaufen, gemäß den Ortsinformationen von Datenbündeln in den Datenkanälen, um zu detektieren, ob Bündelverlust des Signals, B-LOS, in den korrespondierenden Datenkanälen vorhanden ist;
eine erste Alarminformationen-Erzeugungsuntereinheit (132), konfiguriert zum Erzeugen eines B-LOS-Alarms, wenn die erste Detektionsuntereinheit detektiert, dass der B-LOS vorhanden ist;
eine erste Verarbeitungsuntereinheit (133), konfiguriert zum Steuern zum Einschalten eines optischen Schalters, Fallenlassen von Durchlaufen der Datenbündel und Erzeugen eines Bündelalarmangabesignal- bzw. B-AIS-Alarms, der in den nachgeschalteten Knoten einzufügen ist, gemäß dem von der ersten Alarminformationen-Erzeugungsuntereinheit erzeugten B-LOS-Alarm.

13. Netzwerkknoten nach Anspruch 11, wobei die Zielknotenalarm-Überwachungseinheit umfasst:
eine zweite Detektionsuntereinheit (141), konfiguriert zum Detektieren von Datenbündeln nachgeschaltet dem gegenwärtigen Knoten in den Datenkanälen, um zu detektieren, ob Bündelverlust des Signals, B-LOS, Bündelverlust des Rahmens, B-LOF, ein Bündel-Rahmenfehlerbit und ein Alarm und/oder eine Leistungsüberwachungsangabe, zurück an einen vorgeschalteten Knoten übertragen, jeweils in den Datenkanälen vorhanden ist;
eine zweite Alarminformationen-Erzeugungsuntereinheit (142), konfiguriert zum Erzeugen eines B-LOS-Alarms, wenn die zweite Detektionsuntereinheit detektiert, dass der B-LOS vorhanden ist; Erzeugen eines B-LOF-Alarms, wenn die zweite Detektionsuntereinheit detektiert, dass der B-LOF vorhanden ist; Erzeugen einer korrespondierenden Bündelfehler- bzw. B-ERR-Leistungsüberwachungsangabe und/oder eines Bündelsignalminderung- bzw. B-SD-Alarms und/oder eines Bündelsignalausfall- bzw. B-SF-Alarms, wenn die zweite Detektionsuntereinheit detektiert, dass das Bündel-Rahmenfehlerbit vorhanden ist; und Erlangen eines detektierten Bündel-RDI- bzw. B-RDI-Alarms und/oder einer Bündel-REI- bzw. B-REI-Leistungsüberwachungsangabe, wenn die zweite Detektionsuntereinheit detektiert, dass der/die zurück an den vorgeschalteten Knoten übertragene Alarm und/oder Leistungsüberwachungsangabe vorhanden ist; und
eine zweite Verarbeitungsuntereinheit (143), konfiguriert zum korrespondierenden Erzeugen des B-RDI-Alarms, der zurück an den vorgeschalteten Knoten zu übertragen ist, gemäß dem B-LOS-Alarm, B-LOF-Alarm oder B-SF-Alarm, erzeugt von der zweiten Alarminformationen-Erzeugungsuntereinheit; und außerdem Verwerfen der Datenbündel; Erzeugen der B-REI-Leistungsüberwachungsangabe, die zu an den vorgeschalteten Knoten zu übertragen ist, gemäß der von der zweiten Alarminformationen-Erzeugungsuntereinheit erzeugten B-ERR-Leistungsüberwachungsangabe.

## Revendications

1. Procédé de surveillance d'alarme et de performances, comprenant :
la détection (501) de données d'un canal de commande, et la génération d'une alarme ou/et d'une indication de surveillance des performances du canal de commande ;
le procédé étant **caractérisé par**
l'obtention (502) d'informations de carte de largeur de bande, BWMap (BandWidth Map), contenues dans les données du canal de commande, dans lequel les informations BWMap acheminent des informations de position de salves de données dans des canaux de données correspondants ; et
la détection (503) des salves de données dans les canaux de données conformément aux informations de position des salves de données dans les canaux de données, et la génération d'une alarme ou/et d'une indication de surveillance des performances des canaux de données.

2. Procédé selon la revendication 1, dans lequel la détection des données du canal de commande, et la génération de l'alarme ou/et de l'indication de surveillance des performances du canal de commande comprennent :
la détection des données dans le canal de commande, et la détection du fait de savoir si (601) une perte de signal, LOS (Loss Of Signal), (603) une perte de trame, LOF (Loss Of Frame), (605) un bit d'erreur de trame, et (607) une alarme ou/et une indication de surveillance des performances renvoyées à un noeud amont sont présentes dans le canal de commande ;
lorsque la LOS est détectée, la génération (602a) d'une alarme de LOS ;
lorsqu'une LOF est détectée, la génération (604a) d'une alarme de LOF ;
lorsque le bit d'erreur de trame est détecté, la génération (606a) d'une indication de surveillance des performances d'erreur, ERR, correspondante ou/et d'une alarme de dégradation de signal, SD (Signal Degrade), ou/et d'une alarme d'échec de signal, SF (Signal Fail) ; et
lorsque l'alarme ou/et l'indication de surveillance des performances renvoyées au noeud amont sont détectées, l'obtention (608a) d'une alarme d'indication de défaut distant, RDI (Remote Defect Indication), détectée ou/et d'une indication de surveillance des performances d'indication d'erreur distante, REI, détectée.

3. Procédé selon la revendication 2, dans lequel, après la détection des données dans le canal de commande et la génération de l'alarme ou/et de l'indication de surveillance des performances du canal de commande, le procédé comprend en outre le traitement de l'alarme ou/et de l'indication de surveillance des performances du canal de commande, comprenant :
la génération (602a, 604a, 606a) d'une alarme RDI devant être renvoyée au noeud amont, et d'une alarme de signal d'indication d'alarme, AIS (Alarm Indication Signal), devant être insérée dans un noeud aval de manière correspondante conformément à l'alarme de LOS, à l'alarme de LOF, ou à l'alarme de SF, ainsi que l'envoi d'informations d'abandon de l'alarme et de la surveillance des performances des canaux de données à des noeuds des canaux de données ; et
la génération (606a) d'une indication de surveillance des performances de REI devant être renvoyée au noeud amont conformément à l'indication de surveillance des performances d'ERR.

4. Procédé selon la revendication 1, dans lequel, après la détection des salves de données dans les canaux de données conformément aux informations de position des salves de données dans les canaux de données, et la génération de l'alarme ou/et de l'indication de surveillance des performances des canaux de données, le procédé comprend en outre le traitement de l'alarme ou/et de l'indication de surveillance des performances des canaux de données, comprenant :
conformément aux informations de position des salves de données dans les canaux de données, la détection (701) des salves de données passant par un noeud courant dans les canaux de données, la génération d'une alarme ou/et d'une indication de surveillance des performances de noeuds intermédiaires dans les canaux de données, et le traitement de l'alarme ou/et de l'indication de surveillance des performances des noeuds intermédiaires dans les canaux de données ; et
conformément aux informations de position des salves de données dans les canaux de données, la détection (702) de salves de données en aval du noeud courant dans les canaux de données, la génération d'une alarme ou/et d'une indication de surveillance des performances de noeuds de destination dans les canaux de données, et le traitement de l'alarme ou/et de l'indication de surveillance des performances des noeuds de destination dans les canaux de données.

5. Procédé selon la revendication 4, dans lequel, conformément aux informations de position des salves de données dans les canaux de données, la détection de la salve de données passant par le noeud courant dans les canaux de données et la génération de l'alarme ou/et de l'indication de surveillance des performances des noeuds intermédiaires dans les canaux de données comprennent :
conformément aux informations de position des salves de données dans les canaux de données, la détection (801) des salves de données passant par le noeud courant dans les canaux de données, de manière à détecter si une perte de signal en salve, B-LOS (Burst Loss Of Signal), est présente dans les canaux de données correspondants ;
lorsque la B-LOS est détectée, la génération (802a) d'une alarme de B-LOS.

6. Procédé selon la revendication 5, dans lequel le traitement de l'alarme ou/et de l'indication de surveillance des performances des noeuds intermédiaires dans les canaux de données comprend :
conformément à l'alarme de B-LOS, la commande (802a) de fermeture d'un commutateur optique, l'abandon de l'admission à passer des salves de données, et la génération d'une alarme de signal d'indication d'alarme en salve, B-AIS (Burst Alarm Indication Signal), insérée dans le noeud aval.

7. Procédé selon la revendication 4, dans lequel, conformément aux informations de position des salves de données dans les canaux de données, la détection des salves de données en aval du noeud courant dans les canaux de données et la génération de l'alarme ou/et de l'indication de surveillance des performances des noeuds de destination dans les canaux de données comprennent :
la détection des salves de données en aval du noeud courant dans les canaux de données, de manière à détecter si (901) une perte de signal en salve, B-LOS, (903) une perte de trame en salve, B-LOF, (905) un bit d'erreur de trame en salve, et (907) une alarme ou/et une indication de surveillance des performances renvoyées à un noeud amont sont respectivement présents dans les canaux de données ;
lorsque la B-LOS est détectée, la génération (902a) d'une alarme de B-LOS ;
lorsque la B-LOF est détectée, la génération (904a) d'une alarme de B-LOF ;
lorsqu'un bit d'erreur de trame en salve est détecté, la génération (906a) d'une indication de surveillance des performances d'erreur en salve, B-ERR, ou/et d'une alarme de dégradation de signal en salve, B-SD, ou/et d'une alarme d'échec de signal en salve, B-SF, correspondante(s) ;
lorsque l'alarme ou/et l'indication de surveillance des performances renvoyée(s) au noeud amont est/sont détectée(s), l'obtention (908a) d'une alarme RDI en salve, B-RDI, détectée ou/et d'une indication de surveillance des performances de REI en salve, B-REI, détectée.

8. Procédé selon la revendication 7, dans lequel le traitement de l'alarme ou/et de l'indication de surveillance des performances des noeuds de destination dans les canaux de données comprend :
conformément à l'alarme de B-LOS, à l'alarme de B-LOF ou à l'alarme de B-SF, la génération (902a, 904a, 906a) de l'alarme de B-RDI devant être renvoyée au noeud amont de manière correspondante, ainsi que le rejet des salves de données ;
conformément à l'indication de surveillance des performances de B-ERR, la génération (906a) de l'indication de surveillance des performances de B-REI devant être renvoyée au noeud amont.

9. Noeud de réseau, comprenant :
un module de surveillance d'alarmes de canal de commande (101), configuré pour détecter des données dans un canal de commande, et générer une alarme ou/et une indication de surveillance des performances du canal de commande ;
le noeud de réseau étant **caractérisé par**
un module d'obtention (102), configuré pour obtenir des informations de carte de largeur de bande, BWMap, contenues dans des données dans le module de surveillance d'alarmes de canal de commande, dans lequel les informations BWMap acheminent des informations de position de salves de données dans des canaux de données correspondants ; et
un module de surveillance d'alarmes de canal de données (103), configuré pour détecter la salve de données dans les canaux de données conformément à des informations de position de salves de données dans les canaux de données correspondants dans les informations BWMap, et générer une alarme ou/et une indication de surveillance des performances des canaux de données.

10. Noeud de réseau selon la revendication 9, dans lequel le module de surveillance d'alarmes de canal de commande comprend :
une unité de détection (111), configurée pour détecter les données dans le canal de commande, de manière à détecter si une perte de signal, LOS, une perte de trame, LOF, un bit d'erreur de trame, et une alarme ou/et une indication de surveillance des performances renvoyée(s) à un noeud amont est/sont respectivement présente(s) dans le canal de commande ;
une unité de génération d'informations d'alarme (112), configurée pour générer une alarme de LOS lorsque l'unité de détection détecte que la LOS est présente ; générer une alarme de LOF lorsque l'unité de détection détecte que la LOF est présente ; générer une indication de surveillance des performances d'erreur, ERR, ou/et une alarme de dégradation de signal, SF, ou/et une alarme d'échec de signal, SF, correspondante(s) lorsque l'unité de détection détecte que le bit d'erreur de trame est présent ; et obtenir une alarme d'indication de défaut distant, RDI, détectée ou/et une indication de surveillance des performances d'une indication d'erreur distante, REI, lorsque l'unité de détection détecte que l'alarme ou/et l'indication de surveillance des performances renvoyée(s) au noeud amont est/sont présente(s) ;
une unité de traitement (113), configurée pour générer de manière correspondante une alarme RDI devant être renvoyée au noeud amont et une alarme de signal d'indication d'alarme, AIS, devant être insérée dans le noeud aval conformément à l'alarme de LOS, à l'alarme de LOF ou à l'alarme de SF générée par l'unité de génération d'informations d'alarme, et par ailleurs envoyer des informations d'abandon de l'alarme et de la surveillance des performances des canaux de données à des noeuds dans les canaux de données ; générer une indication de surveillance des performances de REI devant être renvoyée au noeud amont conformément à l'indication de surveillance des performances d'ERR générée par l'unité de génération d'informations d'alarme.

11. Noeud de réseau selon la revendication 9, dans lequel le module de surveillance d'alarmes de canal de données comprend :
une unité de surveillance d'alarme de noeud intermédiaire (121), configurée pour détecter des salves de données passant par le noeud courant dans les canaux de données conformément aux informations de position de salves de données dans les canaux de données correspondants dans les informations BWMap, générer l'alarme ou/et l'indication de surveillance des performances des noeuds intermédiaires dans les canaux de données, et traiter l'alarme ou/et l'indication de surveillance des performances des noeuds intermédiaires dans les canaux de données ;
une unité de surveillance d'alarme de noeud de destination (122), configurée pour détecter des salves de données en aval du noeud courant dans les canaux de données conformément aux informations de position de salves de données dans les canaux de données correspondants dans les informations BWMap, générer une alarme ou/et une indication de surveillance des performances des noeuds de destination des canaux de données, et traiter l'alarme ou/et l'indication de surveillance des performances des noeuds de destination dans les canaux de données.

12. Noeud de réseau selon la revendication 11, dans lequel l'unité de surveillance d'alarme de noeud intermédiaire comprend :
une première sous-unité de détection (131), configurée pour détecter des salves de données passant par le noeud courant dans les canaux de données conformément aux informations de position de salves de données dans les canaux de données, de manière à détecter si une perte de signal en salve, B-LOS, est présente dans les canaux de données correspondants ;
une première sous-unité de génération d'informations d'alarme (132), configurée pour générer une alarme de B-LOS lorsque la première sous-unité de détection détecte que la B-LOS est présente ;
une première sous-unité de traitement (133), configurée pour commander la fermeture d'un commutateur optique, abandonner l'admission à passer des salves de données, et générer une alarme de signal d'indication d'alarme en salve, B-AIS, devant être insérée dans le noeud aval, conformément à l'alarme de B-LOS générée par la première sous-unité de génération d'informations d'alarme.

13. Noeud de réseau selon la revendication 11, dans lequel l'unité de surveillance d'alarme de noeud de destination comprend :
une seconde sous-unité de détection (141), configurée pour détecter des salves de données en aval du noeud courant dans les canaux de données, de manière à détecter si une perte de signal en salve, B-LOS, une perte de trame en salve, B-LOF, un bit d'erreur de trame en salve, et une alarme ou/et une indication de surveillance des performances renvoyée(s) à un noeud amont est/sont respectivement présente(s) dans les canaux de données ;
une seconde sous-unité de génération d'informations d'alarme (142), configurée pour générer une alarme de B-LOS lorsque la seconde sous-unité de détection détecte que la B-LOS est présente ; générer une alarme de B-LOF lorsque la seconde sous-unité de détection détecte que la B-LOF est présente ; générer une indication de surveillance des performances d'erreur en salve, B-ERR, ou/et une alarme de dégradation de signal en salve, B-SD, ou/et une alarme d'échec de signal en salve, B-SF, correspondante(s) lorsque la seconde sous-unité de détection détecte que le bit d'erreur de trame en salve est présent ; et obtenir une alarme de RDI en salve, B-RDI, détectée ou/et une indication de surveillance des performances de REI en salve, B-REI, lorsque la seconde sous-unité de détection détecte que l'alarme ou/et l'indication de surveillance des performances renvoyée(s) au noeud amont est/sont présente(s) ; et
une seconde sous-unité de traitement (143), configurée pour générer de manière correspondante l'alarme de B-RDI devant être renvoyée au noeud amont conformément à l'alarme de B-LOS, à l'alarme de B-LOF ou à l'alarme de B-SF générée par la seconde sous-unité de génération d'informations d'alarme ; et par ailleurs, rejeter les salves de données ; générer l'indication de surveillance des performances de B-REI devant être renvoyée au noeud amont conformément à l'indication de surveillance des performances de B-ERR générée par la seconde sous-unité de génération d'informations d'alarme.
